# EUROPEAN PATENT SPECIFICATION

(11) **EP 3 559 490 B1**
(45) Date of publication and mention of the grant of the patent: **09.03.2022**
(21) Application number: 17829514.3
(22) Date of filing: 20.12.2017
(51) Int. Cl.: F16D 1/104, F16D 3/40

(54) **A JOINT ASSEMBLY WITH AN INSTALLATION AID**
VERBINDUNGSANORDNUNG MIT EINER EINBAUHILFE
ENSEMBLE D'ARTICULATION AVEC AIDE À L'INSTALLATION

(30) Priority: 20.12.2016 US 201662436621 P
(43) Date of publication of application: 30.10.2019
(73) Proprietor: Dana Automotive Systems Group, LLC, Maumee, OH 43537 (US)
(72) Inventor: HOLMAN, James, L., Wauseon, OH 43567 (US)
(74) Representative: Pfenning, Meinig & Partner mbB
(86) International application number: PCT/US2017/067573
(87) International publication number: WO 2018/119062

(56) References cited:
- WO-A1-2010/058719
- JP-A- H01 279 120
- US-A- 5 503 494
- US-A1- 2016 017 929

## Description

### CROSS-REFERENCE TO RELATED APPLICATIONS

The present application claims the benefit to U.S. Provisional Patent Application No. 62/436,621 filed on December 20, 2016.

### FIELD OF THE INVENTION

A joint assembly with a slip joint shaft connection having an installation aid for use in a drive-train of a motor vehicle.

### BACKGROUND OF THE INVENTION

Joint assemblies incorporating the use of a slip joint shaft connection type assembly are known in the art. A conventional slip joint shaft connection assembly includes the use of a male splined shaft that is receivable within a female splined shaft. The slip joint connection rotatively connects an end of a vehicle drive shaft to a joint assembly while still allowing the joint assembly and the drive shaft of the vehicle to slide axially back and forth relatively to each other. This allows the joint assembly and the drive shaft of the vehicle to compensate for axle and/or suspension travel when in operation.

The need to use tight tolerances in the spline fit of the slip joint shaft connection assembly in order to reduce the imbalance of the assembly, in combination with the size and mass of the shaft assemblies, makes it difficult to assemble the slip joint shaft connection assembly. Additionally, given the tight tolerances of the spline fit of the slip joint shaft connection assembly, in combination with the sharpness of the edges of the splines left over from the spline formation process, can result in damage to the coating on the mating sets of splines of the male and female components of the slip joint shaft connection assembly when not held in perfect alignment during assembly. As a non-limiting example, the coating on the splines of the slip joint shaft connection assembly may be a Nylon composition. This can result in an undesirable reduction in the overall life and durability of the slip joint shaft connection assembly. Additionally, this results in an increase in the overall about of time needed to assemble the slip joint shaft connection assembly which increases the overall costs associated with the assembly of the slip joint shaft connection assembly. It would therefore be advantageous to develop a slip joint slip joint shaft connection assembly that will not damage the coating on the splines of the slip joint shaft connection assembly and will reduce the overall costs associated with assembling the slip joint shaft connection assembly.

JP H01 279120 A discusses a shaft joint to facilitate fitting by forming spline ends of a spline shaft type first joint so as to suit to the spherical ends thereof, and forming a shaft hole with an inner diameter corresponding to the outer diameter of the first joint on a socket type second joint and a tapered pilot part on one of the splines.

WO 2010/058719 A1 discusses a bearing device for a wheel. Multiple convex parts are provided on the axle part of an outside joint member, this axle part is press-fitted into the hole part of a hub ring, and concave parts are formed on the inner circumference of the hub ring by means of the aforementioned convex parts, thus forming a concavo-convex mating structure for which the entire region where the aforementioned convex parts and the aforementioned concave parts mate is in close contact.

US 2016/017929 A1 discusses is a low-cost propeller shaft adaptable to multiple variations of input/output shafts. An input shaft and a first constant-velocity joint are connected through a first adapter member. The first adapter member is equipped with: a male spline formed on an outer peripheral surface of a small-diameter shaft section and engaged with a female spline of an inner-race member in the first constant-velocity joint; and a female spline formed on an inner peripheral surface of a large-diameter shaft section and engaged with a male spline of the input shaft.

US 5 503 494 A discusses a spline-coupling structure in which at least one of male and female members has a press-fit guide face provided at its end opposed to the other member before press-fitting of the members. The press-fit guide face includes a plurality of guide face portions smoothly interconnecting the end and bottom lands of the spline teeth of the one member to form axially outwardly expanded arcs, a plurality of second guide face portions smoothly interconnecting tooth addendums of the spline teeth and the end to form axially outwardly expanded arcs, and a plurality of third guide face portions smoothly interconnecting tooth flanks of the spline teeth and the second guide face portion to form axially outwardly expanded arcs.

### SUMMARY OF THE INVENTION

A joint assembly having a first joint member that is drivingly connected to a second joint member via a third joint member. The second joint member has of the joint assembly has an outer surface, a first end portion and a second end portion. Extending axially outboard from at least a portion of the outer surface of the intermediate portion of the second joint member is a shaft portion. Circumferentially extending along at least a portion of the outer surface of the shaft portion of the second joint member is a plurality of axially extending shaft portion splines having a first end portion, a second end portion and an intermediate portion interposed between the first and second end portions of the plurality of axially extending shaft portion splines.

At least a portion of the second end portion of the plurality of axially extending shaft portion splines includes an installation aid having a first end, a transition portion and a second end. The installation aid of the second joint member further includes a first portion from the first end to the transition portion and a second portion from the transition portion to the second end of the installation aid. An outermost diameter of the plurality of axially extending shaft portion splines of the first portion and/or the second portion of the installation aid is defined by a radius R2 from a centerline CL1 of the joint assembly. According to the invention as defined by the claims, in a cross sectional plane perpendicular to the axis of said shaft portion, said intermediate portion of said plurality of axially extending shaft portion splines has a substantially polygonal shape, and in a cross sectional plane perpendicular to the axis of said shaft portion, said outer surface of said plurality of axially extending shaft portion splines of said shaft portion installation aid has a continuous arcuate or curved shape that is defined by a plurality of radii.

The above, as well as other advantages of the present invention, will become readily apparent to those skilled in the art from the following detailed description when considered in light of the accompanying drawings in which:
FIG. 1 is a schematic top-plan view of a vehicle having one or more shaft coupling assemblies according to an embodiment of the invention;
FIG. 2 is a schematic top-plan view of another vehicle having one or more shaft coupling assemblies according to an embodiment of theinvention;
FIG. 3 is a schematic top-plan view of yet another vehicle having one or more shaft coupling assemblies according to an embodiment of theinvention;
FIG. 4 is a schematic top-plan view of still yet another vehicle having one or more shaft coupling assemblies according to an embodiment of the invention;
FIG. 5 is a partial cut-away schematic exploded side-view of a joint assembly according to an embodiment of the invention;
FIG. 5A is a schematic sectional view of a portion of the joint assembly illustrated in FIG. 5 along a line A-A;
FIG. 5B is a schematic sectional view of a portion of the joint assembly illustrated in FIGS. 5-5A along a line B-B;
FIG. 5C is a schematic detail view of a portion of the joint assembly illustrated in FIGS. 5-5B;
FIG. 5D is a schematic detail view of a portion of the joint assembly illustrated in FIGS. 5-5C;
FIG. 6 is a partial cut-away schematic side-view of the joint assembly illustrated in FIGS. 5-5D according to an alternative embodiment of the invention;
Fig. 7 is a partial cut-away exploded schematic side-view of the joint assembly illustrated in FIGS. 5-6 according to another embodiment of the invention;
FIG. 8 is a partial cut-away exploded schematic side-view of the joint assembly illustrated in FIGS. 5-7 according to yet another embodiment of the invention;
FIG. 9 is a partial cut-away exploded schematic side-view of a portion of the joint assembly illustrated in FIGS. 508 according to still yet another embodiment of the invention;
FIG. 9A is a schematic detail view of a portion of the joint assembly illustrated in FIG. 9;
FIG. 9B is a schematic sectional view of a portion of the joint assembly illustrated in FIGS. 9 and 9A along a line E-E;
FIG. 9C is a schematic detail view of a portion of the joint assembly illustrated in FIGS. 9-9C;
FIG. 10 is a partial cut-away exploded schematic side-view of a portion of the joint assembly illustrated in FIGS. 5-9C according to still a further embodiment of the invention;
FIG. 11 is a cut-away schematic side-view of a portion of the shaft illustrated in FIGS. 5-10 having an installation aid according to an embodiment of the invention; and
FIG. 12 is a cut-away schematic side-view of a portion of the shaft illustrated in FIGS. 5-11 having an installation aid according to an alternative embodiment of the invention.

### DETAILED DESCRIPTION OF THE INVENTION

It is to be understood that the invention may assume various alternative orientations and step sequences, except where expressly specified to the contrary. It is also understood that the specific devices and processes illustrated in the attached drawings, and described in the specification are simply exemplary embodiments of the inventive concepts disclosed and defined herein. Hence, specific dimensions, directions or other physical characteristics relating to the various embodiments disclosed are not to be considered as limiting, unless expressly stated otherwise.

The present invention relates to a joint assembly having a slip joint shaft connection assembly for use in a drive-train of a motor vehicle. As a non-limiting example, the slip joint shaft connection assembly disclosed herein may be used in connection with a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly and/or a Hardy Spicer joint assembly. Additionally, as a non-limiting example, the slip joint shaft connection assembly disclosed herein may be used in connection with a drive shaft, a propeller shaft and/or a Cardan shaft.

It is within the scope of this invention, and as a non-limiting example, that the slip spline disclosed herein may be used in automotive, off-road vehicle, all-terrain vehicle, construction, structural, marine, aerospace, locomotive, military, machinery, robotic and/or consumer product applications. Additionally, as a non-limiting example, the slip spline disclosed herein may also be used in passenger vehicle, electric vehicle, hybrid vehicle, commercial vehicle, autonomous vehicles, semi-autonomous vehicles and/or heavy vehicle applications.

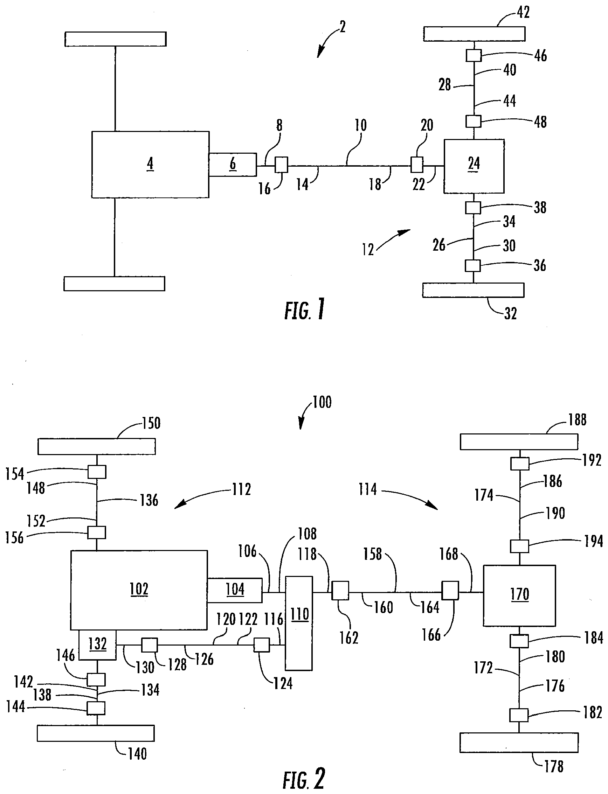

FIG. 1 is a schematic top-plan view of a vehicle 2 having one or more coupling assemblies according to an embodiment of the invention. The vehicle 2 includes an engine 4 which is drivingly connected to a transmission 6. As non-limiting example, the engine 4 of the vehicle 2 can be an internal combustion engine, an electric motor, a steam turbine and/or a gas turbine. A transmission output shaft 8 is then drivingly connected to an end of the transmission 6 opposite the engine 4. The transmission 6 is a power management system which provides controlled application of the rotational power generated by the engine 4 by means of a gear box.

A shaft 10 extends from the transmission output shaft 8 to a rear axle system 12 thereby drivingly connecting the transmission 6 to the rear axle system 12 of the vehicle 2. As a non-limiting example, the shaft 10 of the vehicle 2 may be a drive shaft, a propeller shaft or Cardan shaft. At least a portion of a first end portion 14 of the shaft 10 is drivingly connected to an end of the transmission output shaft 8 opposite the transmission 6 via a first joint assembly 16. It is within the scope of this invention and as a non-limiting example that the first joint assembly 16 of the vehicle 2 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

At least a portion of a second end portion 18 of the shaft 10 is drivingly connected to a second joint assembly 20. It is within the scope of this invention and as a non-limiting example that the second joint assembly 20 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Drivingly connected to an end of the second joint assembly 20, opposite the shaft 10, is a rear axle input shaft 22. The rear axle input shaft 22 drivingly connects the transmission 6 of the vehicle 2 of the rear axle system 12 of the vehicle 2. As a non-limiting example, the rear axle input shaft 22 may be a rear differential input shaft, a coupling shaft, stub shaft or a rear differential pinion shaft. Drivingly connected to an end of the rear axle input shaft opposite the shaft 10 is a rear axle differential assembly 24. The rear axle differential assembly 24 is a set of gears that allows the outer drive wheel(s) of the vehicle 2 to rotate at a faster rate that the inner drive wheel(s). The rotational power is transmitted through the rear axle system 12 as described in more detail below.

The rear axle system 12 further includes a first rear axle half shaft 26 and a second rear axle half shaft 28. The first rear axle half shaft 26 extends substantially perpendicular to the rear axle input shaft 22. At least a portion of a first end portion 30 of the first rear axle half shaft 26 is drivingly connected to a first rear axle wheel assembly 32 and at least a portion of a second end portion 34 of the first rear axle half shaft 26 is drivingly connected to an end of the rear axle differential assembly 24. As a non-limiting example, the second end portion 34 of the first rear axle half shaft 26 may be drivingly connected to a differential side gear, a separate stub shaft, a separate coupling shaft, a first rear axle differential output shaft, a first rear axle half shaft connect and disconnect assembly and/or a shaft that is formed as part of a differential side gear.

According to an embodiment of the invention and as a non-limiting example, at least a portion of the first end portion 30 of the first rear axle half shaft 26 may be drivingly connected to an end of a third joint assembly 36. In accordance with this embodiment of the invention and as a non-limiting example, at least a portion of an end of the third joint assembly 36, opposite the first rear axle half shaft 26, is drivingly connected to at least a portion of the first rear axle wheel assembly 32 of the vehicle 2. It is within the scope of this invention and as a non-limiting example that the third joint assembly 36 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 34 of the first rear axle half shaft 26 may be drivingly connected to an end of a fourth joint assembly 38. As a non-limiting example, at least a portion of an end of the fourth joint assembly 38, opposite the first rear axle half shaft 26, may be drivingly connected to the end of the rear axle differential assembly 24. It is within the scope of this invention and as a non-limiting example that the fourth joint assembly 38 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the fourth joint assembly 38, opposite the first rear axle half shaft 26, may be drivingly connected to a differential side gear, a separate stub shaft, a separate coupling shaft, a first rear axle differential output shaft, a first rear axle half shaft connect and disconnect assembly and/or a shaft that is formed as part of a differential side gear.

The second rear axle half shaft 28 extends substantially perpendicular to the rear axle system input shaft 22 of the vehicle 2. At least a portion of the first end portion 40 of the second rear axle half shaft 28 is drivingly connected to at least a portion of a second rear axle wheel assembly 42. At least a portion of a second end portion 44 of the second rear axle half shaft 28 is drivingly connected to an end of the rear axle differential assembly 24 opposite the first rear axle half shaft 26. It is within the scope of this invention and as a non-limiting example that the second end portion 44 of the second rear axle half shaft 28 may be drivingly connected to a differential side gear, a separate stub shaft, a separate coupling shaft, a second rear axle differential output shaft, a second axle half shaft connect and disconnect assembly and/or a shaft that is formed as part of a differential side gear.

According to an embodiment of the invention and as a non-limiting example, at least a portion of the first end portion 46 of the second rear axle half shaft 28 may be drivingly connected to an end of a fifth joint assembly 46. In accordance with this embodiment of the invention and as a non-limiting example, at least a portion of an end of the fifth joint assembly 46, opposite the second rear axle half shaft 28, is drivingly connected to at least a portion of the second rear axle wheel assembly 42 of the vehicle 2. It is within the scope of this invention and as a non-limiting example that the fifth joint assembly 46 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 44 of the second rear axle half shaft 28 may be drivingly connected to an end of a sixth joint assembly 48. As a non-limiting example, at least a portion of an end of the sixth joint assembly 48, opposite the second rear axle half shaft 28, may be drivingly connected to the end of the rear axle differential assembly 24 opposite the first rear axle half shaft 26. It is within the scope of this invention and as a non-limiting example that the sixth joint assembly 48 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the sixth joint assembly 48, opposite the second rear axle half shaft 28, may be drivingly connected to a differential side gear, a separate stub shaft, a separate coupling shaft, a second rear axle differential output shaft, a second rear axle half shaft connect and disconnect assembly and/or a shaft that is formed as part of a differential side gear.

It is within the scope of this invention and as a non-limiting example that one or more of the joint assemblies 16, 20, 36, 38, 46 and/or 48 may be a joint assembly according to an embodiment of the invention.

FIG. 2 is a schematic top-plan view of a vehicle 100 having one or more coupling assemblies according to an embodiment of the invention. The vehicle 100 has an engine 102 which is drivingly connected to a transmission 104. A transmission output shaft 106 is then drivingly connected to an end of the transmission 104 opposite the engine 102. It is within the scope of this invention and as a non-limiting example that the engine 102 of the vehicle 100 can be an internal combustion engine, an electric motor, a steam turbine and/or a gas turbine. As previously discussed in relation to FIG. 1, the transmission 104 is a power management system which provides controlled application of the rotational energy generated by the engine 102 by means of a gearbox.

The transmission output shaft 106 is drivingly connected to a transfer case input shaft 108 which in turn is drivingly connected to a transfer case 110. The transfer case 110 is used in four-wheel drive and/or all-wheel-drive (AWD) vehicles to transfer the rotational power from the transmission 104 to a forward axle system 112 and a rear axle system 114 by utilizing a series of gears and drive shafts. Additionally, the transfer case 110 allows the vehicle 100 to selectively operate in either a two-wheel drive mode of a four-wheel/AWD drive mode. As illustrated in FIG. 2 and as a non-limiting example, the transfer case 110 includes a first transfer case output shaft 116 and a second transfer case output shaft 118.

A first shaft 120 extends from the first transfer case output shaft 116 toward the forward axle system 112 of the vehicle 100. The first shaft 120 transmits the rotational power from the transfer case 110 to the forward axle system 112 of the vehicle 100 thereby drivingly connecting the transfer case 110 to the forward axle system 112 of the vehicle 100. It is within the scope of this invention and as a non-limiting example that the first shaft 120 may be a drive shaft, a prop shaft or a Cardan shaft.

As illustrated in FIG. 2 and as a non-limiting example, at least a portion of a first end portion 122 of the first shaft 120 is drivingly connected to an end of the first transfer case output shaft 116 opposite the transfer case 110 via a first joint assembly 124. Additionally, as illustrated in FIG. 2 and as a non-limiting example, at least a portion of a second end portion 126 of the first shaft 120 may be drivingly connected to a second joint assembly 128. It is within the scope of this invention and as a non-limiting example that the first and/or second joint assembly 124 and/or 128 of the vehicle 100 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Drivingly connected to an end of the second joint assembly 128, opposite the first shaft 120, is a forward axle input shaft 130. The forward axle input shaft 130 of the vehicle 100 drivingly connects the first shaft 120 of the vehicle 100 to a forward axle differential assembly 132 of the forward axle system 112 of the vehicle 100. In accordance with the embodiment to of the invention illustrated in FIG. 2 and as a non-limiting example, at least a portion of the end of the forward axle system input shaft 130, opposite the first shaft 120, is drivingly connected to at least a portion of the forward axle differential assembly 132. It is within the scope of this invention and as a non-limiting example that the forward axle input shaft 130 may be a forward differential input shaft, a coupling shaft, stub shaft or a forward differential pinion shaft. The forward axle differential assembly 132 is a set of gears that allows the outer drive wheel(s) of the vehicle 100 to rotate at a faster rate that the inner drive wheel(s). The rotational power is transmitted through the forward axle system 112 as described in more detail below.

The forward axle system 112 further includes a first forward axle half shaft 134 and a second forward axle half shaft 136. As illustrated in FIG. 2 and as a non-limiting example, the first forward axle half shaft 134 extends substantially perpendicular to the forward axle input shaft 130 of the vehicle 100. At least a portion of the first end portion 138 of the first forward axle half shaft 134 is drivingly connected to a first forward axle wheel assembly 140 and at least a portion of a second end portion 142 of the first forward axle half shaft 134 is drivingly connected to an end of the forward axle differential assembly 132. It is within the scope of this invention and as a non-limiting example that the second end portion 142 of the first forward axle half shaft 134 may be drivingly connected to a forward differential side gear, a separate stub shaft, a separate coupling shaft, a first forward axle differential output shaft, a first forward axle half shaft connect and disconnect assembly and/or a shaft that is formed as part of a forward differential side gear.

According to an embodiment of the invention and as a non-limiting example, at least a portion of the first end portion 138 of the first forward axle half shaft 134 may be drivingly connected to an end of a third joint assembly 144. In accordance with this embodiment of the invention and as a non-limiting example, at least a portion of an end of the third joint assembly 144, opposite the first forward axle half shaft 134, is drivingly connected to at least a portion of the first forward axle wheel assembly 140 of the vehicle 100. It is within the scope of this invention and as a non-limiting example that the third joint assembly 144 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 142 of the first forward axle half shaft 134 may be drivingly connected to an end of a fourth joint assembly 146. As a non-limiting example, at least a portion of an end of the fourth joint assembly 146, opposite the first forward axle half shaft 134 is drivingly connected to the end of the forward axle differential assembly 132 of the vehicle 100. It is within the scope of this invention and as a non-limiting example that the fourth joint assembly 146 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the fourth joint assembly 146, opposite the first forward axle half shaft 134, may be drivingly connected to a differential side gear, a separate stub shaft, a separate coupling shaft, a first forward axle differential output shaft, a first forward axle half shaft connect and disconnect assembly and/or a shaft that is formed as part of a differential side gear.

The second forward axle half shaft 136 extends substantially perpendicular to the forward axle system input shaft 130 of the vehicle 100. At least a portion of a first end portion 148 of the second forward axle half shaft 136 is drivingly connected to a second forward axle wheel assembly 150. As illustrated in FIG. 2 and as a non-limiting example, at least a portion of a second end portion 152 of the second forward axle half shaft 136 is drivingly connected to an end of the forward axle differential assembly 132 opposite the first forward axle half shaft 134. It is within the scope of this invention and as a non-limiting example that the second end portion 152 of the second forward axle half shaft 136 may be drivingly connected to a forward differential side gear, a separate stub shaft, a separate coupling shaft, a second forward axle differential output shaft, a second forward axle half shaft connect and disconnect assembly and/or a shaft that is formed as part of a forward differential side gear.

According to an embodiment of the invention and as a non-limiting example, at least a portion of the first end portion 148 of the second forward axle half shaft 136 may be drivingly connected to an end of a fifth joint assembly 154. In accordance with this embodiment of the invention and as a non-limiting example, at least a portion of an end of the fifth joint assembly 154, opposite the second forward axle half shaft 136, is drivingly connected to at least a portion of the second forward axle wheel assembly 150 of the vehicle 100. It is within the scope of this invention and as a non-limiting example that the fifth joint assembly 154 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 152 of the second forward axle half shaft 136 may be drivingly connected to an end of a sixth joint assembly 156. As a non-limiting example, at least a portion of an end of the sixth joint assembly 156, opposite the second forward axle half shaft 136, is drivingly connected to the end of the forward axle differential assembly 132 of the vehicle 100 opposite the first forward axle half shaft 134. It is within the scope of this invention and as a non-limiting example that the sixth joint assembly 156 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the six joint assembly 156 of the vehicle 100, opposite the second forward axle half shaft 136, may be drivingly connected to a differential side gear, a separate stub shaft, a separate coupling shaft, a second forward axle differential output shaft, a second forward axle half shaft connect and disconnect assembly and/or a shaft that is formed as part of a differential side gear.

An end of the second transfer case output shaft 118 is drivingly connected to an end of the transfer case 110 opposite the transfer case input shaft 108 of the vehicle 100. A second shaft 158 extends from the second transfer case output shaft 118 toward the rear axle system 114 thereby drivingly connecting the transfer case 110 to the rear axle system 114 of the vehicle 100. As a non-limiting example, the second shaft 158 may be a drive shaft, a propeller shaft or a Cardan shaft. At least a portion of a first end portion 160 of the second shaft 158 is drivingly connected to an end of the second transfer case output shaft 118 opposite the transfer case 110 via a seventh joint assembly 162. It is within the scope of this invention and as a non-limiting example that the seventh joint assembly 162 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

As illustrated in FIG. 2 and as a non-limiting example, at least a portion of a second end portion 164 of the second shaft 158 may be drivingly connected to an eighth joint assembly 166. It is within the scope of this invention and as a non-limiting example that the eighth joint assembly 166 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Drivingly connected to an end of the eighth joint assembly 166, opposite the second shaft 15, is an end of a rear axle system input shaft 168. The rear axle system input shaft 168 drivingly connects the transfer case 110 the rear axle system 114 of the vehicle 100. As a non-limiting example, the rear axle system input shaft 168 may be a rear axle differential input shaft, a coupling shaft, stub shaft or a rear axle differential pinion shaft. Drivingly connected to an end of the rear axle system input shaft 168, opposite the second shaft 158, is a rear axle differential assembly 170. The rear axle differential assembly 170 is a set of gears that allows the outer drive wheel(s) of the vehicle 100 to rotate at a faster rate that the inner drive wheel(s). The rotational power is transmitted through the rear axle system 114 as described in more detail below.

As illustrated in FIG. 2 and as a non-limiting example, the rear axle system 114 further includes a first rear axle half shaft 172 and a second rear axle half shaft 174. The first rear axle half shaft 172 extends substantially perpendicular to the rear axle input shaft 168 of the vehicle 100. At least a portion of a first end portion 176 of the first rear axle half shaft 172 is drivingly connected to a first rear axle wheel assembly 178 and at least a portion of a second end portion 180 of the first rear axle half shaft 172 is drivingly connected to an end of the rear axle differential assembly 170. It is within the scope of this invention and as a non-limiting example that the second end portion 180 of the first rear axle half shaft 172 may be drivingly connected to a rear differential side gear, a separate stub shaft, a separate coupling shaft, a first rear axle differential output shaft a first rear axle half shaft connect and disconnect assembly and/or a shaft that is formed as part of a rear differential side gear.

According to an embodiment of the invention and as a non-limiting example, at least a portion of the first end portion 176 of the first rear axle half shaft 172 may be drivingly connected to an end of a ninth joint assembly 182. In accordance with this embodiment of the invention and as a non-limiting example, at least a portion of an end of the ninth joint assembly 182, opposite the first rear axle half shaft 172, is drivingly connected to at least a portion of the first rear axle wheel assembly 178 of the vehicle 100. It is within the scope of this invention and as a non-limiting example that the ninth joint assembly 182 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 180 of the first rear axle half shaft 172 may be drivingly connected to an end of a tenth joint assembly 184. As a non-limiting example, at least a portion of an end of the tenth joint assembly 184, opposite the first rear axle half shaft 172, is drivingly connected to the end of the rear axle differential assembly 170 of the vehicle 100. It is within the scope of this invention and as a non-limiting example that the tenth joint assembly 184 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the tenth joint assembly 184, opposite the first rear axle half shaft 172, may be drivingly connected to a differential side gear, a separate stub shaft, a separate coupling shaft, a first rear axle differential output shaft, a first rear axle half shaft connect and disconnect assembly and/or a shaft that is formed as part of a differential side gear.

The second rear axle half shaft 174 of the vehicle 100 extends substantially perpendicular to the rear axle system input shaft 168. At least a portion of a first end portion 186 of the second rear axle half shaft 174 is drivingly connected to a second rear axle wheel assembly 188 of the vehicle 100. As illustrated in FIG. 2 of the invention and as a non-limiting example, at least a portion of a second end portion 190 of the second rear axle half shaft 174 is drivingly connected to an end of the rear axle differential assembly 170 opposite the first rear axle half shaft 172. It is within the scope of this invention and as a non-limiting example that the second end portion 190 of the second rear axle half shaft 174 may be drivingly connected to a rear differential side gear, a separate stub shaft, a separate coupling shaft, a second rear axle differential output shaft, [[a]]a second rear axle half shaft connect and disconnect assembly and/or a shaft that is formed as part of a rear differential side gear.

According to an embodiment of the invention and as a non-limiting example, at least a portion of the first end portion 186 of the second rear axle half shaft 174 may be drivingly connected to an end of a eleventh joint assembly 194. In accordance with this embodiment of the invention and as a non-limiting example, at least a portion of an end of the eleventh joint assembly 192, opposite the second rear axle half shaft 174, is drivingly connected to at least a portion of the second rear axle wheel assembly 188 of the vehicle 100. It is within the scope of this invention and as a non-limiting example that the eleventh joint assembly 192 of the vehicle 100 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 190 of the second rear axle half shaft 174 may be drivingly connected to an end of a twelfth joint assembly 194 of the vehicle 100. As a non-limiting example, at least a portion of an end of the twelfth joint assembly 194, opposite the second rear axle half shaft 174, is drivingly connected to the end of the rear axle differential assembly 170 opposite the first rear axle half shaft 172. It is within the scope of this invention and as a non-limiting example that the twelfth joint assembly 194 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the twelfth joint assembly 194, opposite the second rear axle half shaft 174, may be drivingly connected to a differential side gear, a separate stub shaft, a separate coupling shaft, a second rear axle differential output shaft, a second rear axle half shaft connect and disconnect assembly and/or a shaft that is formed as part of a differential side gear.

It is within the scope of this invention and as a non-limiting example that one or more of the joint assemblies 124, 128, 144, 146, 154, 156, 162, 166, 182, 184, 192 and/or 194 may be a joint assembly according to an embodiment of the invention.

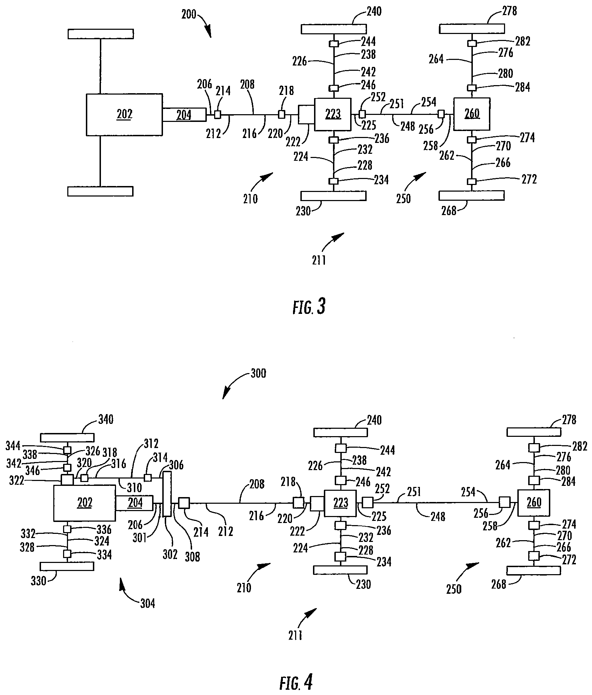

FIG. 3 is a schematic top-plan view of a vehicle 200 having one or more joint assemblies according to an embodiment of the invention. The vehicle 200 has an engine 202 which is drivingly connected to a transmission 204. As non-limiting example, the engine 202 of the vehicle 200 may be an internal combustion engine, an electric motor, a steam turbine and/or a gas turbine. A transmission output shaft 206 is then drivingly connected to an end of the transmission 204 opposite the engine 202 of the vehicle 200. As previously discussed in relation to FIGS. 1 and 2, the transmission 204 is a power management system which provides controlled application of the rotational energy generated by the engine 202 by means of a gearbox.

A first shaft 208 extends from the transmission output shaft 206 toward a forward tandem axle system 210 of a tandem axle system 211 of the vehicle 200. The first shaft 208 of the vehicle 200 drivingly connected the transmission 204 of the vehicle 200 to the forward tandem axle system 210 of the vehicle 200. It is within the scope of this invention and as a non-limiting example that the first shaft 208 may be a drive shaft, a propeller shaft or Cardan shaft.

Drivingly connected to at least a portion of an end of the transmission output shaft 206, opposite the transmission 204, is a first end 212 of the first shaft 208 of the vehicle 200. In accordance with the embodiment of the invention illustrated in FIG. 3 and as a non-limiting example, at least a portion of the first end portion 212 of the first shaft 208 may be drivingly connected to the end of the transmission output shaft 206, opposite the transmission 204, via first joint assembly 214. As a non-limiting example, the first joint assembly 214 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

At least a portion of a second end portion 216 of the first shaft 208 is drivingly connected to at least a portion of a second joint assembly 218 of the vehicle 200. It is within the scope of this invention and as a non-limiting example that the second joint assembly 218 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Drivingly connected to an end of the second joint assembly 218, opposite the first shaft 208, is an end of a forward tandem axle input shaft 220. As a non-limiting example, the forward tandem axle input shaft 220 may be a forward tandem axle differential input shaft, a coupling shaft, stub shaft, a forward tandem axle differential pinion shaft, an inter-axle differential input shaft or an inter-axle differential pinion shaft. Drivingly connected to an end of the forward tandem axle input shaft 220, opposite the first shaft 208, is an inter-axle differential assembly 222 of the forward tandem axle system 210 of the vehicle 200. The inter-axle differential assembly 222 is a device that divides the rotational power generated by the engine 202 between the axles in the vehicle 200. The rotational power is transmitted through the forward tandem axle system 210 as described in more detail below.

As illustrated in FIG. 3 and as a non-limiting example, the inter-axle differential assembly 222 of the vehicle 200 is drivingly connected to a forward tandem axle differential assembly 223 and a forward tandem axle system output shaft 225. The forward tandem axle differential assembly 223 is a set of gears that allows the outer drive wheel(s) of the vehicle 200 to rotate at a faster rate than the inner drive wheel(s).

The forward tandem axle system 210 of the vehicle 200 further includes a first forward tandem axle half shaft 224 and a second forward tandem axle half shaft 226. As illustrated in FIG. 3 and as a non-limiting example, the first forward tandem axle half shaft 224 extends substantially perpendicular to the forward tandem axle input shaft 220 of the vehicle 200. At least a portion of a first end portion 228 of the first forward tandem axle half shaft 224 is drivingly connected to a first forward tandem axle wheel assembly 230 and at least a portion of a second end portion 232 of the first forward tandem axle half shaft 224 is drivingly connected to an end of the forward tandem axle differential assembly 223. It is within the scope of this invention and as a non-limiting example that the second end portion 232 of the first forward tandem axle half shaft 224 may be drivingly connected to a forward tandem axle differential side gear, a separate stub shaft, a separate coupling shaft, a first forward tandem axle differential output shaft, a first forward tandem axle half shaft connect and disconnect assembly and/or a shaft that is formed as part of a forward tandem axle differential side gear.

According to an embodiment of the invention and as a non-limiting example, at least a portion of the first end portion 228 of the first forward tandem axle half shaft 224 may be drivingly connected to an end of a third joint assembly 234. In accordance with this embodiment of the invention and as a non-limiting example, at least a portion of an end of the third joint assembly 234, opposite the first forward tandem axle half shaft 224, is drivingly connected to at least a portion of the first forward tandem axle wheel assembly 230 of the vehicle 200. It is within the scope of this invention and as a non-limiting example that the third joint assembly 234 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 232 of the first forward tandem axle half shaft 224 may be drivingly connected to an end of a fourth joint assembly 236 of the vehicle 200. As a non-limiting example, at least a portion of an end of the fourth joint assembly 236, opposite the first forward tandem axle half shaft 224, is drivingly connected to the end of the forward tandem axle differential assembly 223 of the vehicle 200. It is within the scope of this invention and as a non-limiting example that the fourth joint assembly 236 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the fourth joint assembly 236, opposite the first forward tandem axle half shaft 224, may be drivingly connected to a forward tandem axle differential side gear, a separate stub shaft, a separate coupling shaft, a first forward tandem axle differential output shaft, a first forward tandem axle half shaft connect and disconnect assembly and/or a shaft that is formed as part of a forward tandem axle differential side gear.

The second forward rear tandem axle half shaft 226 extends substantially perpendicular to the forward tandem axle system input shaft 220 of the vehicle 200. At least a portion of a first end portion 238 of the second forward tandem axle half shaft 226 is drivingly connected to at least a portion of a second forward tandem axle wheel assembly 140. As illustrated in FIG. 3 and as a non-limiting example, at least a portion of a second end portion 242 of the second forward tandem axle half shaft 226 is drivingly connected to an end of the forward tandem axle differential assembly 223 opposite the first forward tandem axle half shaft 224. It is within the scope of this invention and as a non-limiting example that the second end portion 242 of the second forward tandem axle half shaft 226 may be drivingly connected to a forward tandem axle differential side gear, a separate stub shaft, a separate coupling shaft, a second forward tandem axle differential output shaft, a second forward tandem axle half shaft connect and disconnect assembly and/or a shaft that is formed as part of a forward tandem axle differential side gear.

According to an embodiment of the invention and as a non-limiting example, at least a portion of the first end portion 238 of the second forward tandem axle half shaft 226 may be drivingly connected to an end of a fifth joint assembly 244. In accordance with this embodiment of the invention and as a non-limiting example, at least a portion of an end of the fifth joint assembly 244, opposite the second forward tandem axle half shaft 226, is drivingly connected to at least a portion of the second forward tandem axle wheel assembly 240 of the vehicle 200. It is within the scope of this invention and as a non-limiting example that the fifth joint assembly 244 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 242 of the second forward tandem axle half shaft 226 may be drivingly connected to an end of a sixth joint assembly 246 of the vehicle 200. As a non-limiting example, at least a portion of an end of the sixth joint assembly 246, opposite the second forward tandem axle half shaft 226, is drivingly connected to the end of the forward tandem axle differential assembly 223 opposite the first forward tandem axle half shaft 224. It is within the scope of this invention and as a non-limiting example that the sixth joint assembly 246 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the sixth joint assembly 246, opposite the second forward tandem axle half shaft 226, may be drivingly connected to a forward tandem axle differential side gear, a separate stub shaft, a separate coupling shaft, a second forward tandem axle differential output shaft, a second forward tandem axle half shaft connect and disconnect assembly and/or a shaft that is formed as part of a forward tandem axle differential side gear.

Drivingly connected to an end of the forward tandem axle system output shaft 225, opposite the inter-axle differential assembly 222, is a second shaft 248. The second shaft 248 extends from the forward tandem axle system output shaft 225 toward a rear tandem axle system 250 of the vehicle 200. As a result, the second shaft 248 of the vehicle 200 drivingly connects the inter-axle differential assembly 222 to the rear tandem axle system 250 of the vehicle 200. It is within the scope of this invention and as a non-limiting example that the second shaft 248 may be a drive shaft, a propeller shaft or a Cardan shaft.

At least a portion of a first end portion 251 of the second shaft 248 is drivingly connected to an end of a seventh joint assembly 252 opposite the forward tandem axle system output shaft 225 of the vehicle 200. As a non-limiting example, the seventh joint assembly 252 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

As best seen in FIG. 3 and as a non-limiting example, at least a portion of a second end portion 254 of the second shaft 248 is drivingly connected to an end of an eighth joint assembly 256. It is within the scope of this invention and as a non-limiting example that the eighth joint assembly 256 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Drivingly connected to an end of the eighth joint assembly 256, opposite the second shaft 248, is a rear tandem axle system input shaft 258 of the vehicle 200. As a non-limiting example, the rear tandem axle system input shaft 258 may be a rear tandem axle differential input shaft, a coupling shaft, stub shaft or a rear tandem axle differential pinion shaft. Drivingly connected to an end of the rear tandem axle input shaft 258, opposite the second shaft 248, is a rear tandem axle differential assembly 260 of the rear tandem axle system 250 of the vehicle 200. The rear tandem axle differential assembly 260 is a set of gears that allows the outer drive wheel(s) of the vehicle 200 to rotate at a faster rate than the inner drive wheel(s). The rotational power is transmitted through the rear tandem axle system 250 as described in more detail below.

As illustrated in FIG. 3 and as a non-limiting example, the rear tandem axle system 250 further includes a first rear tandem axle half shaft 262 and a second rear tandem axle half shaft 264. The first rear tandem axle half shaft 262 extends substantially perpendicular to the rear tandem axle system input shaft 258 of the vehicle 200. At least a portion of a first end portion 266 of the first rear tandem axle half shaft 262 is drivingly connected to a first rear tandem axle wheel assembly 268 and at least a portion of a second end portion 270 of the first rear tandem axle half shaft 262 is drivingly connected to an end of the rear tandem axle differential assembly 260. It is within the scope of this invention and as a non-limiting example that the second end portion 270 of the first rear tandem axle half shaft 262 is drivingly connected to a rear tandem axle differential side gear, a separate stub shaft, a separate coupling shaft, a first rear tandem axle differential output shaft, a first rear tandem axle half shaft connect and disconnect assembly and/or a shaft that is formed as part of a rear tandem axle differential side gear.

According to an embodiment of the invention and as a non-limiting example, at least a portion of the first end portion 266 of the first rear tandem axle half shaft 262 may be drivingly connected to an end of a ninth joint assembly 272. In accordance with this embodiment of the invention and as a non-limiting example, at least a portion of an end of the ninth joint assembly 272, opposite the first rear tandem axle half shaft 262, is drivingly connected to at least a portion of the first rear tandem axle wheel assembly 268 of the vehicle 200. It is within the scope of this invention and as a non-limiting example that the ninth joint assembly 262 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 270 of the first rear tandem axle half shaft 262 may be drivingly connected to an end of a tenth joint assembly 274 of the vehicle 200. As a non-limiting example, at least a portion of an end of the tenth joint assembly 274, opposite the first rear tandem axle half shaft 262, is drivingly connected to the end of the rear tandem axle differential assembly 260 of the vehicle 200. It is within the scope of this invention and as a non-limiting example that the tenth joint assembly 274 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the tenth joint assembly 274, opposite the first rear tandem axle half shaft 262, may be drivingly connected to a rear tandem axle differential side gear, a separate stub shaft, a separate coupling shaft, a first rear tandem axle differential output shaft, a first rear tandem axle half shaft connect and disconnect assembly and/or a shaft that is formed as part of a rear tandem axle differential side gear.

Extending substantially perpendicular to the rear tandem axle system input shaft 258 of the vehicle 200 is the second rear tandem axle half shaft 264. At least a portion of a first end portion 276 of the second rear tandem axle half shaft 264 is drivingly connected to a second rear tandem axle wheel assembly 278. As illustrated in FIG. 3 and as a non-limiting example, at least a portion of a second end portion 280 of the second rear tandem axle half shaft 264 is drivingly connected to an end of the rear tandem axle differential assembly 260 opposite the first rear tandem axle half shaft 262 of the vehicle 200. It is within the scope of this invention and as a non-limiting example that the second end portion 280 of the second rear tandem axle half shaft 264 may be drivingly connected to a rear tandem axle differential side gear, a separate stub shaft, a separate coupling shaft, a second rear tandem axle differential output shaft, a second rear tandem axle half shaft connect and disconnect assembly and/or a shaft that is formed as part of a rear tandem axle differential side gear.

According to an embodiment of the invention and as a non-limiting example, at least a portion of the first end portion 276 of the second rear tandem axle half shaft 264 may be drivingly connected to an end of a eleventh joint assembly 282. In accordance with this embodiment of the invention and as a non-limiting example, at least a portion of an end of the eleventh joint assembly 282, opposite the second rear tandem axle half shaft 264, is drivingly connected to at least a portion of the second rear tandem axle wheel assembly 278 of the vehicle 200. It is within the scope of this invention and as a non-limiting example that the eleventh joint assembly 282 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 280 of the second rear tandem axle half shaft 264 may be drivingly connected to an end of a twelfth joint assembly 284 of the vehicle 200. As a non-limiting example, at least a portion of an end of the twelfth joint assembly 284, opposite the second rear axle half shaft 264, is drivingly connected to the end of the rear tandem axle differential assembly 260 opposite the first rear tandem axle half shaft 262. It is within the scope of this invention and as a non-limiting example that the twelfth joint assembly 284 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the twelfth joint assembly 284, opposite the second rear tandem axle half shaft 264, may be drivingly connected to a rear tandem axle differential side gear, a separate stub shaft, a separate coupling shaft, a second rear tandem axle differential output shaft, a second rear tandem axle half shaft connect and disconnect assembly and/or a shaft that is formed as part of a rear tandem axle differential side gear.

It is within the scope of this invention and as a non-limiting example that one or more of the joint assemblies 214, 218, 234, 236, 244, 246, 252, 256, 272, 274, 282 and/or 284 may be a joint assembly according to an embodiment of the invention.

FIG. 4 is a schematic top-plan view of still yet another vehicle 300 having one or more joint assemblies according to an embodiment of the invention. The vehicle 300 illustrated in FIG. 4 is the same as the vehicle 200 illustrated in FIG. 3, except where specifically noted below. As illustrated in FIG. 4 and as a non-limiting example, an end of the transmission output shaft 206 of the vehicle 300, opposite the transmission 204, is drivingly connected to at least a portion of a transfer case input shaft 301. Drivingly connected to an end of the transfer case input shaft 301, opposite the transmission output shaft 208 is drivingly connected to at least a portion of a transfer case 302. The transfer case 302 of the vehicle 300 allows for the selective transfer the rotational power from the transmission 204 to a forward axle system 304 and the tandem axle system 211 of the vehicle 300 by utilizing a series of gears and drive shafts. As illustrated in FIG. 4 and as a non-limiting example, the transfer case 302 includes a first transfer case output shaft 306 and a second transfer case output shaft 308.

A third shaft 310 extends from the first transfer case output shaft 306 toward the forward axle system 304 of the vehicle 300. The third shaft 310 transmits the rotational power from the transfer case 302 to the forward axle system 304 of the vehicle 300 thereby drivingly connecting the transfer case 302 to the forward axle system 304 of the vehicle 300. It is within the scope of this invention and as a non-limiting example that the third shaft 310 may be a drive shaft, a prop shaft or a Cardan shaft.

As best seen in FIG. 4 and as a non-limiting example, at least a portion of a first end portion 312 of the third shaft 312 is drivingly connected to an end of the first transfer case output shaft 306 opposite the transfer case 302 via a thirteenth joint assembly 314. Additionally, as best seen in FIG. 4 and as a non-limiting example, at least a portion of a second end portion 316 of the third shaft 310 may be drivingly connected to a fourteenth joint assembly 318. It is within the scope of this invention and as a non-limiting example that the thirteenth and/or fourteenth joint assembly 314 and/or 318 of the vehicle 300 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Drivingly connected to an end of the fourteenth joint assembly 318, opposite the third shaft 310, is a forward axle input shaft 320 of the vehicle 300. The forward axle input shaft 320 drivingly connects the third shaft 310 of the vehicle 300 to a forward axle differential assembly 322 of the forward axle system 304 of the vehicle 300. In accordance with the embodiment to of the invention illustrated in FIG. 4 and as a non-limiting example, at least a portion of the end of the forward axle system input shaft 320, opposite the third shaft 310, is drivingly connected to at least a portion of the forward axle differential assembly 322. It is within the scope of this invention and as a non-limiting example that the forward axle input shaft 320 may be a forward differential input shaft, a coupling shaft, stub shaft or a forward differential pinion shaft. The forward axle differential 320 is a set of gears that allows the outer drive wheel(s) of the vehicle 300 to rotate at a faster rate that the inner drive wheel(s). The rotational power is transmitted through the forward axle system 304 as described in more detail below.

The forward axle system 304 further includes a first forward axle half shaft 324 and a second forward axle half shaft 326. As illustrated in FIG. 4 and as a non-limiting example, the first forward axle half shaft 324 extends substantially perpendicular to the forward axle input shaft 320 of the vehicle 300. At least a portion of the first end portion 328 of the first forward axle half shaft 324 is drivingly connected to a first forward axle wheel assembly 330 and at least a portion of a second end portion 332 of the first forward axle half shaft 324 is drivingly connected to an end of the forward axle differential assembly 322. It is within the scope of this invention and as a non-limiting example that the second end portion 332 of the first forward axle half shaft 324 may be drivingly connected to a forward differential side gear, a separate stub shaft, a separate coupling shaft, a first forward axle differential output shaft, a first forward axle half shaft connect and disconnect assembly and/or a shaft that is formed as part of a forward differential side gear.

According to an embodiment of the invention and as a non-limiting example, at least a portion of the first end portion 328 of the first forward axle half shaft 324 may be drivingly connected to an end of a fifteenth joint assembly 334. In accordance with this embodiment of the invention and as a non-limiting example, at least a portion of an end of the fifteenth joint assembly 334, opposite the first forward axle half shaft 324, is drivingly connected to at least a portion of the first forward axle wheel assembly 330 of the vehicle 300.

It is within the scope of this invention and as a non-limiting example that the fifteenth joint assembly 334 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 332 of the first forward axle half shaft 324 may be drivingly connected to an end of a sixteenth joint assembly 336. As a non-limiting example, at least a portion of an end of the sixteenth joint assembly 336, opposite the first forward axle half shaft 324 is drivingly connected to the end of the forward axle differential assembly 322 of the vehicle 300. It is within the scope of this invention and as a non-limiting example that the sixteenth joint assembly 336 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the sixteenth joint assembly 336, opposite the first forward axle half shaft 324, may be drivingly connected to a differential side gear, a separate stub shaft, a separate coupling shaft, a first forward axle differential output shaft, a first forward axle half shaft connect and disconnect assembly and/or a shaft that is formed as part of a differential side gear.

Extending substantially perpendicular to the forward axle system input shaft 326 is the second forward axle half shaft 326 of the vehicle 300. At least a portion of a first end portion 338 of the second forward axle half shaft 326 is drivingly connected to a second forward axle wheel assembly 340 of the vehicle 300. As illustrated in FIG. 4 and as a non-limiting example, at least a portion of a second end portion 342 of the second forward axle half shaft 326 is drivingly connected to an end of the forward axle differential assembly 322 opposite the first forward axle half shaft 324. It is within the scope of this invention and as a non-limiting example that the second end portion 342 of the second forward axle half shaft 326 may be drivingly connected to a forward differential side gear, a separate stub shaft, a separate coupling shaft, a second forward axle differential output shaft, a second forward axle half shaft connect and disconnect assembly and/or a shaft that is formed as part of a forward differential side gear.

According to an embodiment of the invention and as a non-limiting example, at least a portion of the first end portion 338 of the second forward axle half shaft 326 may be drivingly connected to an end of a seventeenth joint assembly 344. In accordance with this embodiment of the invention and as a non-limiting example, at least a portion of an end of the seventeenth joint assembly 344, opposite the second forward axle half shaft 326, is drivingly connected to at least a portion of the second forward axle wheel assembly 340 of the vehicle 300. It is within the scope of this invention and as a non-limiting example that the seventeenth joint assembly 344 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

Additionally, in accordance with this embodiment of the invention and as a non-limiting example, at least a portion of the second end portion 342 of the second forward axle half shaft 326 may be drivingly connected to an end of a eighteenth joint assembly 346. As a non-limiting example, at least a portion of an end of the eighteenth joint assembly 346, opposite the second forward axle half shaft 326 is drivingly connected to the end of the forward axle differential assembly 322 opposite the first forward tandem axle half shaft 324. It is within the scope of this invention and as a non-limiting example that the eighteenth joint assembly 346 may be a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly. Additionally, it is within the scope of this invention and as a non-limiting example that the end of the eighteenth joint assembly 346, opposite the second forward axle half shaft 326, may be drivingly connected to a differential side gear, a separate stub shaft, a separate coupling shaft, a second forward axle differential output shaft, a second forward axle half shaft connect and disconnect assembly and/or a shaft that is formed as part of a differential side gear.

An end of the second transfer case output shaft 308 is drivingly connected to an end of the transfer case 302 opposite the transfer case input shaft 301 of the vehicle 300. The first shaft 208 of the vehicle 300 extends from the second transfer case output shaft 308 toward the forward tandem axle system 210 of the tandem axle system 211 of the vehicle 300. In accordance with the embodiment of the invention illustrated in FIG. 4 and as a non-limiting example, at least a portion of the end of the second transfer case output shaft 308, opposite the transfer case 302, is drivingly connected to an end of the first joint assembly 214 opposite the first shaft 208.

It is within the scope of this invention and as a non-limiting example that one or more of the joint assemblies 214, 218, 234, 236, 244, 246, 252, 256, 272, 274, 282, 284, 314, 318, 334, 336, 344 and/or 346 may be a joint assembly according to an embodiment of the invention.

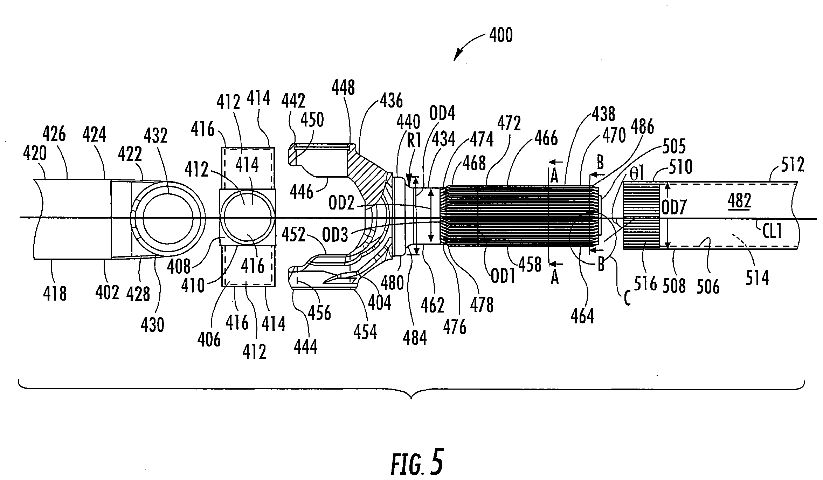

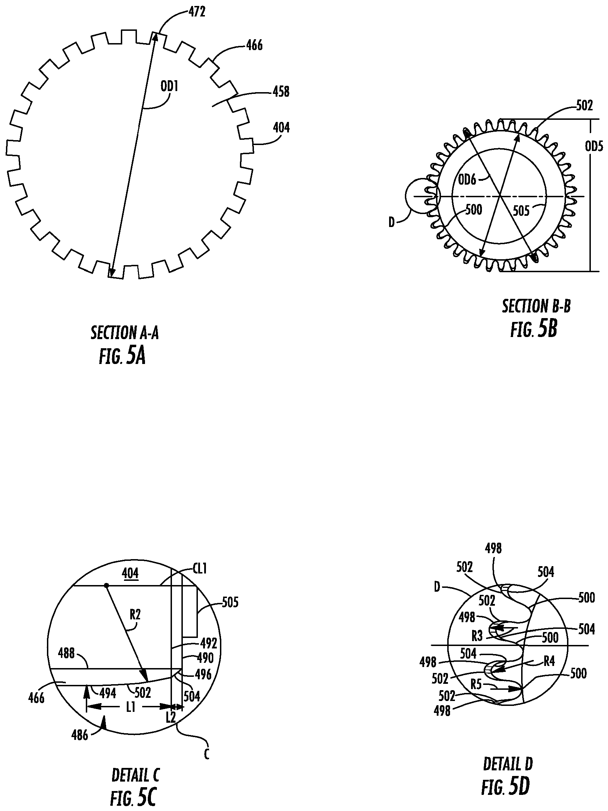

FIGS. 5-5D schematically illustrate a joint assembly 400 according to an embodiment of the invention. As best seen in FIG. 5 and as a non-limiting example, the joint assembly includes a first joint member 402, a second joint member 404 and a third joint member 406. The third joint member 406 of the joint assembly 400 drivingly connects the first joint member 402 to the second joint member 404 of the joint assembly 400. It is within the scope of this invention and as a non-limiting example that the joint assembly 400 may be a universal joint assembly, a U-joint assembly, a universal coupling assembly, a cardan joint assembly, a double cardan joint assembly, a Hooke's joint assembly, a Spicer joint assembly, a universal joint assembly or a constant velocity joint assembly.

As best seen in FIG. 5 and as a non-limiting example, the third joint member 406 of the joint assembly 400 includes a body portion 408 having an outer surface 410. Extending from at least a portion of the outer surface 410 of the body portion 408 of the third joint member 406 is a plurality of trunnions 412. The plurality of trunnions 412 of the third joint member 406 are disposed equidistant from each other along with outer surface 410 of the body portion 408 of the third joint member 406. It is within the scope of this invention and as a non-limiting example that the third joint member 406 of the joint assembly 400 may be a journal cross.

Rotatively connected to at least a portion of the outer surface 410 of the plurality of trunnions 412 of the third joint member 406 is a bearing cap assembly 414. It is within the scope of this invention and as a non-limiting example that the bearing cap assembly 414 includes a bearing cap 416 which houses a plurality of bearings (not shown) that are disposed along an inner surface (not shown) of the bearing cap 416. The bearing cap assembly 414 provides a rotational connection between the third joint member 406 and the first and second joint members 402 and 404 of the joint assembly 400 thereby reducing the amount of friction between the first, second and third joint members 402, 404 and 406 when in operation.

Drivingly and rotatively connected to at least a portion of the third joint member 406 is the first joint member 402 of the joint assembly 400. As best seen in FIG. 5 and as a non-limiting example, the first joint member 402 of the joint assembly 400 has an outer surface 418, a first end portion 420, a second end portion 422 and an intermediate portion 424 interposed between the first and second end portions 420 and 422 of the first joint member 402. At least a portion of the first end portion 420 of the first joint member 402 of the coupling assembly 400 includes a substantially cylindrical portion 426. The substantially cylindrical portion 426 of the first joint member 402 of the coupling assembly 400 is of a size and shape to drivingly connect at least a portion of the first joint member 402 to another driveline component (not shown) of a vehicle (not shown). It is within the scope of this invention and as a non-limiting example that the other driveline component (not shown) may be a propeller shaft, a pinion shaft, a differential input shaft, an axle system input shaft, an axle half shaft, a prop shaft, a drive shaft, cardan shaft, a companion flange and/or another joint member of the joint assembly 400. Additionally, it is within the scope of this invention and as a non-limiting example that the first joint member 402 of the joint assembly 400 may be an end yoke.

Extending axially outboard from at least a portion of the outer surface 418 of the intermediate portion 424 of the first joint member 402, away from the substantially cylindrical portion 426 of the first joint member 402, is one or more axially extending yoke arms or ears 428 having a first side (not shown) and second side 430. As best seen in FIG. 5 and as a non-limiting example, the one or more axially extending yoke arms or ears 428 of the first joint member 402 are disposed axially inboard from and adjacent to the substantially cylindrical portion 426 of the first joint member 402 of the joint assembly 400.

One or more openings 432 extend from the first side (not shown) to the second 430 of the one or more axially extending yoke arms or ears 428 of the first joint member 402. The one or more openings 432 extending from the first side (not shown) to the second side 430 of the one or more axially extending yoke arms or ears 428 of the first joint member 402 are of a size and shape to received and/or retain at least a portion of the bearing cap 416 and the plurality of trunnions 412 of the third joint member 406. As a result, at least a portion of the bearing cap 416 disposed along the outer surface 410 of the plurality of trunnions 412 of the third joint member 406 are disposed within the one or more openings 432 in the one or more axially extending yoke arms or ears 428 of the first joint member 402 of the coupling assembly 400.

Rotatively and drivingly connected to at least a portion of the third joint member 406 is the second joint member 404 of the coupling assembly 400. As best seen in FIG. 5 and as a non-limiting example, the second joint member 404 of the coupling assembly 400 has an outer surface 434, a first end portion 436, a second end portion 438 and an intermediate portion 440 interposed between the first and second end portions 436 and 438 of the second joint member 404. It is within the scope of this invention and as a non-limiting example that the second joint member 404 of the joint assembly 400 may be an end yoke or a universal joint yoke member.

Extending axially outboard from at least a portion of the outer surface 434 of the intermediate portion 440 of the second joint member 404, toward the first and third joint members 402 and 406 of the joint assembly 400, is a first axially extending yoke arm or ear 442 and a second axially extending yoke arm or ear 444. As best seen in FIG. 5 and as a non-limiting example, the first axially extending yoke arm or ear 442 of the second joint member 404 has a first side 446 and a second side 448. One or more openings 450 extend from the first side 446 to the second side 448 of the first axially extending yoke arm or ear 436 of the second joint member 404 of the joint assembly 400. The one or more openings 450 in the first axially extending yoke arm or ear 436 of the second joint member 404 are of a size and shape to receive and/or retain at least a portion of the bearing cap 416 and the plurality of trunnions 412 of the third joint member 406. As a result, at least a portion of the bearing cap 416 disposed along the outer surface 410 of the plurality of trunnions 412 of the third joint member 406 are disposed within the one or more openings 450 in the first axially extending yoke arm or ear 442 of the second joint member 404 of the coupling assembly 400.

As best seen in FIG. 5 and as a non-limiting example, the second axially extending yoke arm or ear 444 of the second joint member 404 has a first side 452 and a second side 454. Extending from the first side 452 to the second side 454 of the second axially extending yoke arm 444 of the second joint member 404 is one or more openings 456. The one or more openings 456 in the second axially extending yoke arm or ear 444 are aligned with the one or more openings 450 in the first axially extending yoke arm or ear 442 of the second joint member 404. Additionally, the one or more openings 456 of the second axially extending yoke arm 444 of the second joint member 404 are of a size and shape to receive and/or retain at least a portion of bearing cap 416 and the plurality of trunnions 412 of the third joint member 406. As a result, at least a portion of the bearing cap 416 disposed along the outer surface 410 of the plurality of trunnions 412 of the third joint member 406 are disposed within the one or more openings 456 in the second axially extending yoke arm or ear 444 of the second joint member 404 of the coupling assembly 400.

A shaft portion 458 extends co-axially with and axially outboard from at least a portion of the intermediate portion 440 of the second joint member 404 away from the first and second axially extending yoke arms 442 and 44 of the second joint member 404. As best seen in FIG. 5 and as a non-limiting example, the shaft portion 458 of the second joint member 404 has a first end portion 462 and a second end portion 464. In accordance with the embodiment of the invention illustrated in FIG. 5 and as a non-limiting example, at least a portion of the first end portion 462 of the shaft portion 458 of the second joint member 404 is integrally formed as part of the intermediate portion 440 of the second joint member 404. As a result, it is within the scope of this invention and as a non-limiting example that the second joint member 404 illustrated in FIG. 5 may be a single integrally formed component.

It is within the scope of this invention and as a non-limiting example that the shaft portion 458 of the second joint member 404 of the joint assembly 400 may be solid, substantially hollow or hollow. By making at least a portion of the shaft portion 458 of the second joint member 404 hollow or substantially hollow, it aids in reducing the overall weight and costs associated with the joint assembly 400 which aids in increasing the overall fuel efficiency of the vehicle (not shown).

Circumferentially extending from at least a portion of the outer surface 460 of the shaft portion 458 of the second joint member 404 is a plurality of axially extending shaft portion splines 466. As illustrated in FIG. 5 and as a non-limiting example, the plurality of axially extending shaft portion splines 466 of the second joint member 404 have a first end portion 468, a second end portion 470 and an intermediate portion 472 interposed between the first and second end portions 468 and 470 of the plurality of axially extending shaft portion splines 466. It is within the scope of this invention and as a non-limiting example that the plurality of axially extending shaft portion splines 466 may be cast a part of the second joint member 404, forged as part of the second joint member 404, cold forged into the second joint member 404, heat forged into the second joint member 404 and/or machined into the outer surface 434 of the second joint member 404 of the joint assembly 400.

In accordance with the embodiment of the invention illustrated in FIG. 5 and as a non-limiting example, the intermediate portion 472 of the plurality of axially extending shaft portion splines 466 have an outermost diameter OD1. The outermost diameter OD1 of the intermediate portion 472 of the plurality of axially extending shaft portion splines 466 is greater than an outermost diameter OD2 of the first end portion 460 of the shaft portion 458 of the second joint member 404. As best seen in FIG. 5 and as a non-limiting example, the portion of the first end portion 460 of the shaft portion 458 of the second joint member having the outermost diameter OD2 does not have the plurality of axially extending shaft portion splines 466 thereon.

According to an alternative embodiment of the invention (not shown) and as a non-limiting example, the outermost diameter OD1 of the intermediate portion 472 of the plurality of axially extending shaft portion splines 466 may be substantially equal to the outermost diameter OD2 of the first end portion 460 of the second joint member 404.

As best seen in FIG. 5A and as a non-limiting example, intermediate portion 472 of the plurality of axially extending shaft portion splines 466 of the second joint member 404 may have a substantially polygonal shape. It is within the scope of this invention and as a non-limiting example that intermediate portion 472 of the plurality of axially extending shaft portion splines 466 may have a substantially square or substantially rectangular cross-sectional shape.

At least a portion of the first end portion 468 of the plurality of axially extending shaft portion splines 466 has a tapered portion 474 having a first end portion 476 and a second end portion 478. In accordance with the embodiment of the invention illustrated in FIG. 5 and as a non-limiting example, the tapered portion 474 of the plurality of axially extending shaft portion splines 466 has an outermost diameter OD3 that increases from the first end portion 476 to the second end portion 478 of the tapered portion 474. It is within the scope of this invention and as a non-limiting example that the tapered portion 474 of the plurality of axially extending shaft portion splines 466 may be cast a part of the second joint member 404, forged as part of the second joint member 404, cold forged into the second joint member 404, heat forged into the second joint member 404 and/or machined into the outer surface 434 of the second joint member 404 of the joint assembly 400.

Circumferentially extending from at least a portion of the outer surface 434 of the intermediate portion 440 of the second joint member 404 of the joint assembly 400 is an increased diameter portion 480. As best seen in FIG. 5 and as a non-limiting example, the increased diameter portion 480 of the second joint member 404 has an outermost diameter OD4 that is substantially equal to or greater than the outermost diameters OD1, OD2 and/or OD3 of the second joint member 404. By making the outermost diameter OD4 of the increased diameter portion 480 of the second joint member 404 substantially equal to or greater than the outer diameters OD1, OD2 and/or OD3 of the second joint member 404, it provides a positive stop for a shaft 482 of the joint assembly 400. As a result, this aids in preventing the axial movement of the shaft 482 of the joint assembly 400 relative to the second joint member 404 beyond a predetermined amount when in operation or during assembly of the joint assembly 400. It is within the scope of this invention and as a non-limiting example that the increased diameter portion 480 of the intermediate portion 440 of the second joint member 404 may be substantially cylindrical in shape.

Disposed axially outboard from and directly adjacent to an end of the increased diameter portion 480 of the second joint member 404, opposite the first and second axially extending yoke arms or ears 442 and 444, is a radiused portion 484. As best seen in FIG. 5 and as a non-limiting example, the radiused portion 484 of the second joint member 404 is substantially concave in shape and defined by a substantially constant radius R1. It is therefore to be understood that an outermost diameter of the radiused portion 484 of the second joint member 404 decreases from the increased diameter portion 480 to the first end portion 460 of the shaft portion 458 of the second joint member 404.

In accordance with an embodiment of the invention (not shown) and as a non-limiting example, the plurality of axially extending shaft portion splines 466 of the second joint member 404 may extend all the way across the outer surface 434 of the shaft portion 458 of the second joint member 404 to the radiused portion 484.

At least a portion of the second end portion 470 of the plurality of axially extending shaft portion splines 466 of the second joint member 404 has a shaft portion installation aid 486. As best seen in FIG. 5C and as a non-limiting example the shaft portion installation aid 486 of the plurality of axially extending shaft portion splines 466 of the second joint member 404 has a first end 488, a second end 490 and a transition portion 492. The transition portion 492 of the shaft portion installation aid 486 of the plurality of axially extending shaft portion splines 466 is interposed between the first and second end 488 and 490 of the shaft portion installation aid 486 of the plurality of axially extending shaft portion splines 466. It is within the scope of this invention and as a non-limiting example that the shaft portion installation aid 486 of the second joint member 404 may be formed at the same time as the plurality of axially extending shaft portion splines 466 are formed or the shaft portion installation aid 486 may be formed as a result of one or more subsequent processes after the formation of the plurality of axially extending shaft portion splines 466.

In accordance with the embodiment of the invention illustrated in FIG. 5C and as a non-limiting example, the shaft portion installation aid 486 of the plurality of axially extending shaft portion splines 466 further includes a first portion 494 and a second portion 496. The first portion 494 of the shaft portion installation aid 486 of the plurality of axially extending shaft portion splines 466 has a length L1 that extends from the first end 488 to the transition portion 492 of the shaft portion installation aid 486. The second portion 496 of the shaft portion installation aid 486 of the plurality of axially extending shaft portion splines 466 has a length L2 that extends from the transition portion 492 to the second end 490 of the shaft portion installation aid 486 of the plurality of axially extending shaft portion splines 466. Additionally, the second portion 496 of the shaft portion installation aid 486 of the plurality of axially extending shaft portion splines 466 is disposed axially outboard from and directly adjacent to the first portion 494 of shaft portion installation aid 486. It is therefore to be understood that the transition portion 492 of the shaft portion installation aid 486 of the plurality of axially extending shaft portion splines 466 defines the point at which the first portion 494 transitions to the second portion 496 of the shaft portion installation aid 486 of the plurality of axially extending shaft portion splines 466. In accordance with the embodiment of the invention illustrated in FIG. 5C and as a non-limiting example, the length L1 of the first portion 494 of the shaft portion installation aid 486 is larger than the length L2 of the second portion 496 of the shaft portion installation aid 486 of the second joint member 404. As a non-limiting example, the length L1 of the first portion 494 of the shaft portion installation aid 486 is at least twice as long as the length L2 of the second portion 496 of the shaft portion installation aid 486.

It is within the scope of this invention and as a non-limiting example that the shaft portion installation aid 486 of the second end portion 470 of the plurality of axially extending shaft portion splines 466 may be cast as part of the second joint member 404, machined into the second end portion 470 of the plurality of axially extending shaft portion splines 466, cold forged into the plurality of axially extending shaft portion splines 466 and/or heat forged into the plurality of axially extending shaft portion splines 466 of the second joint member 404. As a result, it is to be understood that the first portion 494 and/or the second portion 496 of the shaft portion installation aid 486 of the plurality of axially extending shaft portion splines 466 may be cast as part of the second joint member 404, machined into the second end portion 470 of the plurality of axially extending shaft portion splines 466, cold forged into the plurality of axially extending second shaft splines 466 and/or heat forged into the plurality of axially extending shaft portion splines 466 of the second joint member 404.

As best seen in FIG. 5B and as a non-limiting example, the plurality of axially extending shaft portion splines 466 at the first end 488 of the shaft portion installation aid 486 have an outermost diameter OD5 that is substantially equal to the outermost diameter OD1 of the plurality of axially extending shaft portion splines 466. Additionally, as best seen in FIG. 5B and as a non-limiting example, the plurality of axially extending shaft portion splines 466 at the transition portion 492 of the installation aid 485 have an outermost diameter OD6 that is less than the outer diameter OD5 of the plurality of axially extending shaft portion splines 466 at the first end 488 of the shaft portion installation aid 486. Furthermore, the outermost diameter OD6 of the plurality of axially extending shaft portion splines 466 at the transition portion 492 of the shaft portion installation aid 486 is greater than the outer diameter OD2 of the first end portion 460 of the shaft portion 458 of the second joint member 404.

The plurality of axially extending shaft portion splines 466 of the first portion 492 of the shaft portion installation aid 486 have an outermost diameter that is defined by a radius R2 from the centerline CL1 of the joint assembly 400. In accordance with the embodiment of the invention illustrated in FIG. 5C and as a non-limiting example, the outermost diameter of the plurality of axially extending shaft portion splines 466 at the first portion 494 of the shaft portion installation aid 486 decreases from the first end 488 to the transition portion 492 of the shaft portion installation aid 486. As a result, it is to be understood that the plurality of axially extending shaft portion splines 466 of the first portion 494 of the shaft portion installation aid 486 have an outermost diameter that decreases at a non-constant rate from the first end 488 to the transition portion 492 of the shaft portion installation aid 486 of the second joint member 404 of the joint assembly 400.

According to an alternative embodiment of the invention (not shown) and as a non-limiting example, the plurality of axially extending shaft portion splines 466 of the first portion 494 of the shaft portion installation aid 486 may have an outermost diameter that decreases at a substantially constant rate from the first end 488 to the transition portion 492 of the shaft portion installation aid 486. In accordance with this embodiment of the invention (not shown) and as a non-limiting example, the outermost diameter of the plurality of axially extending shaft portion splines 466 is not defined by the radius R2 illustrated in FIG. 5C. It is therefore to be understood that the outermost diameter of the plurality of axially extending shaft portion splines 466 of the first portion 494 of the shaft portion installation aid 486 will decrease from the first end 488 to the transition portion 492 at an angle (not shown) relative to the centerline CL1 of the joint assembly 400.

In accordance with a further embodiment of the invention and as a non-limiting example, the plurality of axially extending shaft portion splines 466 of the first portion 494 of the shaft portion installation aid 486 may have a shape and geometry that is approximately 10×10^{o}.

As best seen in FIG. 5C and as a non-limiting example, the plurality of axially extending shaft portion splines 466 of the second portion 496 of the shaft portion installation aid 486 have an outermost diameter that decreases from the transition portion 492 to the second end 490 of the shaft portion installation aid 486. In accordance with the embodiment of the invention illustrated in FIG. 5C and as a non-limiting example, the outermost diameter of the plurality of axially extending shaft portion splines 466 of the second portion 496 of the shaft portion installation aid 486 decreases at a faster rate than the outermost diameter of the plurality of axially extending shaft portion splines 466 of the first portion 494 of the shaft portion installation aid 486. It is within the scope of this invention and as a non-limiting example that the outermost diameter of the plurality of axially extending shaft portion splines 466 of the second portion 496 of the shaft portion installation aid 486 may decrease at a substantially constant rate from the transition portion 492 of the shaft portion installation aid 486 to the second end 490 of the shaft portion installation aid 486. As a result, in accordance with the embodiment of the invention illustrated in FIG. 5 and as a non-limiting example, the outermost diameter of the plurality of axially extending shaft portion splines 466 of the second portion 496 of the shaft portion installation aid 486 decreases at an angle θ1 relative to the centerline CL1 of the joint assembly 400. It is within the scope of this invention and as a non-limiting example that the second portion 496 of the shaft portion installation aid 486 may be a chamfer portion where the angle θ1 is from approximately 35° to approximately 55°.

According to an alternative embodiment of the invention(not shown) and as a non-limiting example, the outermost diameter of the plurality of axially extending shaft portion splines 466 of the second portion 496 of the shaft portion installation aid 486 may decrease at a non-constant rate from the transition portion 492 of the shaft portion installation aid 486 to the second end 490 of the installation aid 468. As a result, in accordance with this embodiment of the invention(not shown) and as a non-limiting example, the outermost diameter of the plurality of axially extending shaft portion splines 466 will not decrease from the transition portion 492 of the shaft portion installation aid 486 to second end 490 of the shaft portion installation aid 486 at the angle θ1 relative to the centerline CL1 of the joint assembly 400. In accordance with this embodiment of the invention (not shown) and as a non-limiting example, the outermost diameter of the plurality of axially extending shaft portion splines 466 of the second portion 496 of the shaft portion installation aid 486 are defined by a radius (not shown).

The plurality of axially extending shaft portion splines 466 of the second joint member 404 define a plurality of peaks 498 and a plurality of valleys 500. As best seen in FIG. 5D and as a non-limiting example, the outer surface 434 of the plurality of axially extending shaft portion spines 466 of the first portion 494 of the shaft portion installation aid 486 has a plurality of peaks 502 that are defined by a radius R3. Additionally, as best seen in FIG. 5D and as a non-limiting example, the outer surface 434 of the plurality of axially extending shaft portion splines 466 of the second portion 496 of the shaft portion installation aid 486 has a plurality of peaks 504 that are defined by a radius R4. It is within the scope of this invention and as a non-limiting example that the radius R3 of the plurality of axially extending shaft portion splines 466 of the first portion 494 of the shaft portion installation aid 486 may be substantially equal to the radius R4 of the plurality of axially extending shaft portion splines 466 of the second portion 496 of the shaft portion installation aid 486.

In accordance with the embodiment of the invention illustrated in FIG. 5D and as a non-limiting example, the plurality of valleys 500 of the plurality of axially extending shaft portion splines 466 of the first and second portions 494 and 496 of the shaft portion installation aid 486 are defined by a radius R5. As a result, it is to be understood that the outer surface 434 of the plurality of axially extending shaft portion splines 466 of the shaft portion installation aid 486 of the second joint member 404 have a substantially continuous arcuate or curved shape that is defined by a plurality of radii. According to an embodiment of the invention and as a non-limiting example, the radius R5 of the plurality of valleys 500 of the plurality of axially extending shaft portion splines 466 of the first and second portions 494 and 496 of the shaft portion installation aid 486 may be substantially equal to or greater than the radii R3 and/or R4 of the plurality of axially extending shaft portion splines 466 of the first and/or second portions 494 and/or 496 of the shaft portion installation aid 486. In accordance with an alternative embodiment of the invention and as a non-limiting example, the radius R5 of the plurality of valleys 500 of the plurality of axially extending shaft portion splines 466 of the first and second portions 494 and 496 of the shaft portion installation aid 486 may be substantially equal to or less than the radii R3 and/or R4 of the plurality of axially extending shaft portion splines 466 of the first and/or second portions 494 and/or 496 of the shaft portion installation aid 486.

The shaft portion installation aid 486 of the plurality of axially extending shaft portion splines 466 of the second joint member 404 according to the embodiment of the invention illustrated in FIGS. 5-5D provides an outer diameter type fit for the second joint member 404 with in the shaft 482. In accordance with this embodiment of the invention and as a non-limiting example, the plurality of valleys 500 of the plurality of axially extending shaft portion splines 466 have a substantially constant innermost diameter ID1 across the entire length of the plurality of axially extending shaft portion splines 466 of the second joint member 404. By making the second joint member 404 with the plurality of axially extending shaft portion splines 466 having the shaft portion installation aid 486 described herein, it aids in reducing the overall costs associated with assembly of the joint assembly 400. This is achieved by allowing the shaft portion 458 of the second joint member 404 to be inserted within the shaft 482 without requiring exact alignment of the second joint member 404 relative to the shaft 482 making assembly easier, faster and more cost efficient for the joint assembly 400.

At least a portion of the second end portion 470 of the shaft portion 458 of the second joint member 404 includes a reduced diameter portion 505. As best seen in FIGS. 5 and 5C and as a non-limiting example, the reduced diameter portion 505 of the second joint member 404 is disposed axially outboard from and directly adjacent to the second end 490 of the shaft portion installation aid 486 of the second joint member 404. It is within the scope of this invention and as a non-limiting example that the reduced diameter portion 505 of the second joint member 404 provides an attachment portion for the machines used to cast, machine, cold forge and/or heat forge the plurality of axially extending shaft portion splines 466 and/or the shaft portion installation aid 486 into the outer surface 434 of the second joint member 404. Additionally, it is within the scope of this invention and as a non-limiting example that the reduced diameter portion 505 of the second joint member 404 may be either solid or at least partially hollow in order to aid in reducing the overall weight and material costs associated with the joint assembly 400. As a non-limiting example the reduced diameter portion 505 of the second joint member 404 may be substantially cylindrical in shape.

Extending co-axially with the second joint member 404 of the joint assembly 400 is the shaft 482. As best seen in FIG. 5 and as a non-limiting example, the shaft 482 has an inner surface 506, an outer surface 508, a first end portion 510 and a second end portion 512. The inner surface 506 and the outer surface 508 of the shaft 482 defines a hollow portion 514 therein. The hollow portion 514 of the shaft 482 of the joint assembly 400 is of a size and shape to receive and/or retain at least a portion of the second joint member 404 of the joint assembly 400. It is within the scope of this invention and as a non-limiting example that the shaft 482 of the joint assembly 400 may be a drive shaft, a propeller shaft or Cardan shaft.

Circumferentially extending from at least a portion of the inner surface 506 of the shaft 482 is a plurality of axially extending shaft splines 516. The plurality of axially extending shaft splines 516 of the shaft 482 are complementary to and meshingly engaged with the plurality of axially extending shaft portion splines 466 of the second joint member 404 of the joint assembly 400.

By allowing the second joint member 404 to translate axially relative to the shaft 482, it allows the shaft 482 to be drivingly engaged with the second joint member 404 without having a rigid connection. This makes the assembly, repair and/or replacement of the joint assembly 400 easier and more cost efficient. Additionally, it allows at least a portion of the forces exerted on the joint assembly 400 when the vehicle (not shown) experiences a crash condition to be absorbed by the joint assembly 400. The energy from the crash is absorbed by allowing the second joint member 404 to at least partially slide within the hollow portion 514 of the shaft 482 of the of the joint assembly 400. This also reduces the overall amount of energy that is transmitted through the drive-line of the vehicle (not shown) during the crash condition thereby reducing the amount of damage to the drive-train of the vehicle (not shown) during a crash condition. As a result, the joint assembly 400 aids in improving the overall life, durability and crash safety of the vehicle (not shown).

In order to reduce the overall amount of friction experienced between the plurality of axially extending shaft portion splines 466 and the plurality of axially extending shaft splines 516 of the joint assembly 400, the joint assembly 400 may further include the use of one or more lubrication fluids (not shown). It is within the scope of this invention and as a non-limiting example that the one or more lubrication fluids (not shown) may be an oil and/or a grease composition.

In accordance with the embodiment of the invention illustrated in FIG. 5 and as a non-limiting example, the shaft 482 of the joint assembly 400 has an outermost diameter OD7. The outermost diameter OD7 of the shaft 483 of the joint assembly 400 is less than the outermost diameter OD4 of the increased diameter portion 480 of the second joint member 404 of the joint assembly 400. As a result, when the second joint member 404 of the joint assembly 400 has translated axially within the hollow portion 514 of the shaft 482 a perdetermined amount, at least a portion of the first end portion 510 of the shaft 482 will contact at least a portion of the increased diameter portion 480 and/or the radiused portion 484 of the second joint member 404. This provides a positive stop for the second joint member 404 and prevents further insertion of the second joint member 404 within the hollow portion 514 of the shaft 482.

According to an embodiment of the invention (not shown) and as a non-limiting example, at least a portion of the plurality of axially extending shaft splines 516 of the first end portion 510 of the shaft 482 may include the use of a chamfered, beveled and/or a radiused edge portion (not shown). The chamfered, beveled and/or a radiused edge portion (not shown) of the plurality of axially extending shaft spines 516 in the inner surface 506 of the first end portion 510 of the shaft 482 provides an additional aid in the assembly of the joint assembly 400. As a result, the chamfered, beveled and/or a radiused edge portion (not shown) of the plurality of axially extending shaft splines 516 aids in reducing the overall amount of cost and time associated with the assembly of the joint assembly 400.

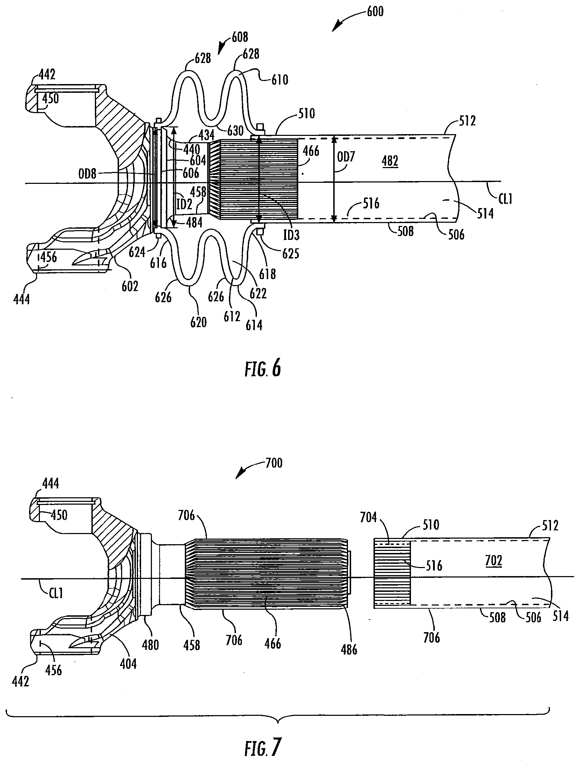

FIG. 6 is a partial cut-away schematic side-view of a joint assembly 600 according to an alternative embodiment of the invention. The joint assembly 600 illustrated in FIG. 6 is the same the joint assembly 400 illustrated in FIGS. 5-5D, except where specifically noted below. As illustrated in FIG. 6 and as a non-limiting example, the joint assembly 600 includes a second joint member 602 having an increased diameter portion 604 circumferentially extending from at least a portion of the outer surface 434 of the intermediate portion 440 of the second joint member 602. Circumferentially extending along at least a portion of the outer surface 434 of the increased diameter portion 604 of the second joint member 602 is a groove 606.

Disposed radially outboard from at least a portion of the second joint member 602 and the shaft 482 of the joint assembly 600 is a boot assembly 608. As illustrated in FIG. 6 and as a non-limiting example, the boot assembly 608 includes a flexible boot 610 having an inner surface 612, an outer surface 614, a first end portion 616, a second end portion 618 and an intermediate portion 620 interposed between the first end second end portions 616 and 618 of the flexible boot 610. The inner surface 612 and the outer surface 614 of the flexible boot 610 defines a hollow portion 622 therein. The boot assembly 608 of the joint assembly 600 aids in preventing the migration of dirt, dust and/or debris into the meshing connection of the plurality of axially extending shaft portion splines 466 of the second joint member 602 and the plurality of axially extending shaft splines 516 of the shaft 482. As a result, it is to be understood that the boot assembly 608 of the joint assembly 600 aids in increasing the overall life and durability of the joint assembly 600.

At least a portion of the first end portion 616 of the flexible boot 610 of the boot assembly 608 is integrally connected to at least a portion of the increased diameter portion 604 of the intermediate portion 440 of the second joint member 602 of the joint assembly 600. As illustrated in FIG. 6 and as a non-limiting example, the boot assembly 608 of the joint assembly 600 may include the use of a first boot retention member 624 in order to aid in securing the first end portion 616 of the flexible boot 610 to the outer surface 434 of the increased diameter portion 604 of the second joint member 602. When the first boot retention member 624 of the boot assembly 608 is tightened or radially compressed, at least a portion of the first end portion 616 of the flexible boot 610 is received and/or retained within at least a portion of the groove 606 in the outer surface 434 of the increased diameter portion 604 of the second joint member 602. This aids in ensuring that at least a portion of the first end portion 616 of the flexible boot 610 of the boot assembly 608 is integrally connected to at least a portion of the second joint member 602 of the joint assembly 600. It is within the scope of this invention and as a non-limiting example that the first boot retention member 624 of the boot assembly 608 may be a boot clamp.

In accordance with the embodiment of the invention illustrated in FIG. 6 and as a non-limiting example, at least a portion of the second end portion 618 of the flexible boot 610 of the boot assembly 608 is integrally connected to at least a portion of the outer surface 508 of the first end portion 510 of the shaft 428 of the joint assembly 600. As illustrated in FIG. 6 and as a non-limiting example, the boot assembly 608 of the joint assembly 600 may include the use of a second boot retention member 625 in order to aid in securing the second end portion 618 of the flexible boot 610 to the outer surface 508 of the shaft 482. This aids in ensuring that at least a portion of the second end portion 618 of the flexible boot 610 of the boot assembly 608 is integrally connected to at least a portion of the shaft 482 of the joint assembly 600. It is within the scope of this invention and as a non-limiting example that the second boot retention member 625 of the boot assembly 608 may be a boot clamp.

As illustrated in FIG. 6 and as a non-limiting example, at least a portion of the intermediate portion 620 of the flexible boot 610 of the boot assembly 608 includes a plurality of convolutions 626. The plurality of convolutions 626 of the intermediate portion 620 of the flexible boot 610 are defined by one or more peaks 628 and one or more valleys 630. When in operation, the plurality of convolutions 626 of the flexible boot 610 will flex as the shaft 482 of the joint assembly 600 translates axially relative to the second joint member 602 of the joint assembly 600. This aids in ensuring that the meshing relationship of the plurality of axially extending shaft portion splines 466 and the plurality of axially extending shaft splines 516 are protected from the migration of dirt, dust and/or debris for all or substantially all axially movements of the shaft 482 relative to the second joint member 602 of the joint assembly 600. As a result, it is to be understood that the plurality of convolutions 628 of the flexible boot 610 aid in increasing the overall life and durability of the joint assembly 600.

Additionally, as best seen in FIG. 6 and as a non-limiting example, the first end portion 616 of the flexible boot 610 has an inner diameter ID2 and the second end portion 618 of the flexible boot 610 has an inner diameter ID2. The inner diameter ID2 of the first end potion 616 of the flexible boot 610 is substantially equal to or greater than an outermost diameter OD8 of the increased diameter portion 604 of the second joint member 602. In accordance with the embodiment of the invention illustrated in FIG. 6 and as a non-limiting example, the outermost diameter OD8 of the increased diameter portion 604 of the second joint member 602 is greater than the outermost diameter OD7 of the shaft 528 of the joint assembly 600. Additionally, in accordance with the embodiment of the invention illustrated in FIG. 6 and as a non-limiting example, the inner diameter ID3 of the second end portion 618 of the flexible boot 610 is substantially equal to or greater than the outermost diameter OD7 of the shaft 482 of the joint assembly 600. As a result, it is within the scope of this invention and as a non-limiting example that the inner diameter ID2 of the first end portion 616 of the flexible boot 610 may be greater than the inner diameter ID3 of the second end portion 618 of the flexible boot 610.

FIG. 7 is a partial cut-away exploded schematic side-view of a joint assembly 700 according to another embodiment of the invention. The joint assembly 700 illustrated in FIG, 7 is the same as the joint assemblies 400 and 600 illustrated in FIGS. 5-5, except where specifically noted below. As illustrated in FIG. 7 and as a non-limiting example, the joint assembly 700 includes a shaft 702. It is within the scope of this invention and as a non-limiting example that the shaft 702 of the joint assembly 700 may be a drive shaft, a propeller shaft or Cardan shaft.

Circumferentially extending from at least a portion of the inner surface 506 of the shaft 702 is the plurality of axially extending shaft splines 516. The plurality of axially extending shaft splines 516 on the inner surface 506 of the shaft 702 are complementary to and meshingly engaged with the plurality of axially extending shaft portion spines 466 on the outer surface 434 of the shaft portion 458 of the second joint member 404 of the joint assembly 700.

According to the embodiment of the invention illustrated in FIG. 7 and as a non-limiting example, the plurality of axially extending shaft splines 516 of the shaft 702 may be at least partially encapsulated with a coating material 704. The coating material 704 on the plurality of axially extending shaft splines 516 of the shaft 702 aids in reducing the overall amount of friction experienced by the sliding and meshing engagement of the plurality of axially extending shaft portion splines 466 of the second joint member 404 and the plurality of axially extending shaft splines 516 of the shaft 702 when in operation and during assembly. It is within the scope of this invention and as a non-limiting example that the coating material 704 on the plurality of axially extending shaft splines 516 may be a synthetic polymer composition, such as but not limited to, Nylon^{™}, Nylon 6 or Nylon 6,6 from DuPont.

By incorporating the use of the shaft portion installation aid 486 as part of the plurality of axially extending shaft portion splines 466 of the second joint member 404, it further aids in preventing damage and/or harm to the coating material 704 on the plurality of axially extending attachment shaft splines 516 of the shaft 702 during assembly of the joint assembly 700. The shaft portion installation aid 486 of the second joint member 404 aids in preventing the occurrence of any scoring, scratches, abrasions, removal and/or partial removal of an amount of the coating material 704 from the plurality of axially extending shaft splines 516 of the shaft 702 of the joint assembly 700. The occurrence of any damage and/or harm to the coating material 704 of the shaft 702 during assembly of the joint assembly 700 has a negative effect on the overall life and durability of the joint assembly 700. As a result, it is to be understood that the shaft portion installation aid 486 of the second joint member 404 aids in improving the overall life and durability of the joint assembly 700.

As illustrated in FIG. 7 and as a non-limiting example, the plurality of axially extending shaft portion splines 466 on the outer surface 434 of the shaft portion 458 of the second joint member 404 may include a coating material 706. The coating material 706 at least partially encapsulates the plurality of axially extending shaft portion splines 466 on the second joint member 404 of the joint assembly 700. The coating material 706 on the plurality of axially extending shaft portion splines 466 of the second joint member 404 aids in reducing the overall amount of friction experienced by the sliding and meshing engagement of the plurality of axially extending shaft portion splines 466 of the second joint member 404 and the plurality of axially extending shaft splines 516 of the shaft 702 when in operation and during assembly. It is within the scope of this invention and as a non-limiting example that the coating material 706 on the plurality of axially extending shaft portion splines 466 may be a synthetic polymer composition, such as but not limited to, Nylon^{™}, Nylon 6 or Nylon 6,6 from DuPont.

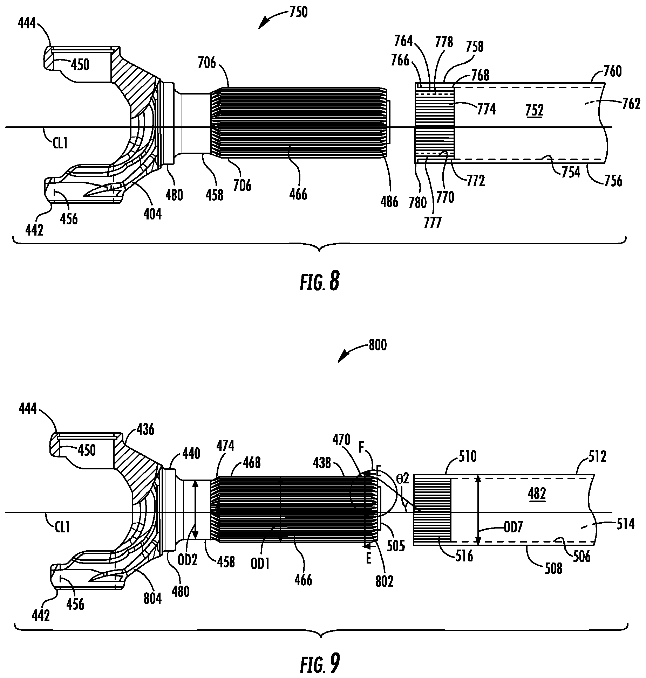

FIG. 8 is a partial cut-away exploded schematic side-view of a joint assembly 750 according to yet another embodiment of the invention. The joint assembly 750 illustrated in FIG. 8 is the same as the joint assemblies 400, 600 and 700 illustrated in FIGS. 5-7, except where specifically noted below. As illustrated in FIG. 8 and as a non-limiting example, the joint assembly 750 includes a shaft 752 having an inner surface 754, an outer surface 756, a first end portion 758 and a second end portion 760. The inner surface 754 and the outer surface 756 of the shaft 752 of the joint assembly 750 defines a hollow portion 762 therein. It is within the scope of this invention and as a non-limiting example that the shaft 752 of the joint assembly 750 may be a drive shaft, a propeller shaft or Cardan shaft.

Extending co-axially with and integrally connected to at least a portion of the first end portion 758 of the shaft 752 of the joint assembly 750 is an attachment adapter 764. As illustrated in FIG. 8 and as a non-limiting example, the attachment adapter 764 of the joint assembly 750 has a first end portion 766, a second end portion 768, an inner surface 770 and an outer surface 772. The inner surface 770 and the outer surface 772 of the attachment adapter 764 defines a hollow portion 774 therein. The hollow portion 774 of the attachment adapter 764 is of a size and shape to receive and/or retain at least a portion of the shaft portion 458 of the second joint member 404 of the joint assembly 750.

Circumferentially extending along at least a portion of the inner surface 770 of the attachment adapter 764 is a plurality of axially extending attachment adapter splines 777. The plurality of axially extending attachment adapter splines 777 of the attachment adapter 764 are complementary to and meshingly engaged with the plurality of axially extending shaft portion splines 466 of the second joint member 404 of the joint assembly 750.

By allowing the second joint member 404 to translate axially relative to the shaft 752, it allows the shaft 752 to be drivingly engaged with the second joint member 404 without having a rigid connection. This makes the assembly, repair and/or replacement of the joint assembly 750 easier and more cost efficient. Additionally, it allows at least a portion of the forces exerted on the joint assembly 750 when the vehicle (not shown) experiences a crash condition to be absorbed by the joint assembly 750. The energy from the crash is absorbed by allowing the second joint member 404 to at least partially slide within the hollow portion 762 of the shaft 752 of the of the joint assembly 750. This also reduces the overall amount of energy that is transmitted through the drive-line of the vehicle (not shown) during the crash condition thereby reducing the amount of damage to the drive-train of the vehicle (not shown) during a crash condition. As a result, the joint assembly 750 aids in improving the overall life, durability and crash safety of the vehicle (not shown).

In order to reduce the overall amount of friction experienced between the plurality of axially extending shaft portion splines 466 and the plurality of axially extending attachment adapter splines 777 of the joint assembly 750, the joint assembly 750 may further include the use of one or more lubrication fluids (not shown). It is within the scope of this invention and as a non-limiting example that the one or more lubrication fluids (not shown) may be an oil and/or a grease composition.

In accordance with an embodiment of the invention and as a non-limiting example, the plurality of axially extending attachment adapter splines 777 of the attachment adapter 764 may be at least partially encapsulated by a coating material 778. The coating material 778 on the plurality of axially extending attachment adapter splines 777 of the attachment adapter 764 aids in reducing the overall amount of friction experienced by the sliding and meshing engagement of the plurality of axially extending shaft portion splines 466 and the plurality of axially extending attachment adapter splines 777 when in operation and during assembly. It is within the scope of this invention and as a non-limiting example that the coating material 778 on the plurality of axially extending attachment adapter splines 777 may be a synthetic polymer composition, such as but not limited to, Nylon^{™}, Nylon 6 or Nylon 6,6 from DuPont.

By incorporating the use of the shaft portion installation aid 486 as part of the plurality of axially extending shaft portion splines 466 of the second joint member 404, it further aids in preventing damage and/or harm to the coating material 778 on the plurality of axially extending attachment adapter splines 777 of the attachment adapter 764 during assembly of the joint assembly 750. The shaft portion installation aid 486 of the second joint member 404 aids in preventing the occurrence of any scoring, scratches, abrasions, removal and/or partial removal of an amount of the coating material 778 from the plurality of axially extending attachment adapter splines 777 of the attachment adapter 764 of the joint assembly 750. The occurrence of any damage and/or harm to the coating material 778 of the attachment adapter 764 during assembly of the joint assembly 750 has a negative effect on the overall life and durability of the joint assembly 750. As a result, it is to be understood that the shaft portion installation aid 486 of the second joint member 404 aids in improving the overall life and durability of the joint assembly 750.

According to an embodiment of the invention (not shown) and as a non-limiting example, at least a portion of the plurality of axially extending attachment adapter splines 777 of the first end portion 766 of the attachment adapter 764 may include the use of a chamfered, beveled and/or a radiused edge portion (not shown). The chamfered, beveled and/or a radiused edge portion (not shown) of the plurality of axially extending attachment adapter spines 777 in the inner surface 770 of the first end portion 766 of the attachment adapter 764 provides an additional aid in the assembly of the joint assembly 750. As a result, the chamfered, beveled and/or a radiused edge portion (not shown) of the plurality of axially extending attachment adapter splines 777 aids in reducing the overall amount of cost and time associated with the assembly of the joint assembly 750.

Integrally connected to at least a portion of the outer surface 772 of the attachment adapter 764 is at least a portion of the first end portion 758 of the shaft 752 of the joint assembly 750. According to the embodiment of the invention illustrated in FIG. 8 and as a non-limiting example, when the joint assembly 750 is assembled, at least a portion of the attachment adapter 764 is disposed within the hollow portion 762 of the shaft 752 of the joint assembly 750. As a result, in accordance with the embodiment of the invention illustrated in FIG. 8 and as a non-limiting example the second joint member 404 of the joint assembly 750 is drivingly connected to the shaft 752 of the joint assembly 750 via the attachment adapter 764. It is within the scope of this invention and as a non-limiting example that the first end portion 758 of the shaft 752 may be integrally connected to the outer surface 772 of the attachment adapter 764 by using one or more welds, one or more mechanical fasteners, one or more adhesives, a splines connection and/or a threaded connection.

Circumferentially extending from at least a portion of the outer surface 772 of the first end portion 766 of the attachment adapter 764 is an increased diameter portion 780. The increased diameter portion 780 of the attachment adapter 764 provides a positive stop preventing the insertion of the attachment adapter 764 beyond a pre-determined amount within the hollow portion 762 of the shaft 752. Additionally, the increased diameter portion 780 of the attachment adapter 764 may provide an attachment surface for at least a portion of the first end portion 758 of the shaft 752 of the joint assembly 750. As a result, it is within the scope of this invention and as a non-limiting example that at least a portion of the first end portion 758 of the shaft 752 may be integrally connected to at least a portion of the increased diameter portion 780 of the attachment adapter 764 by using one or more welds, one or more mechanical fasteners, one or more adhesives, a spline connection and/or a threaded connection.

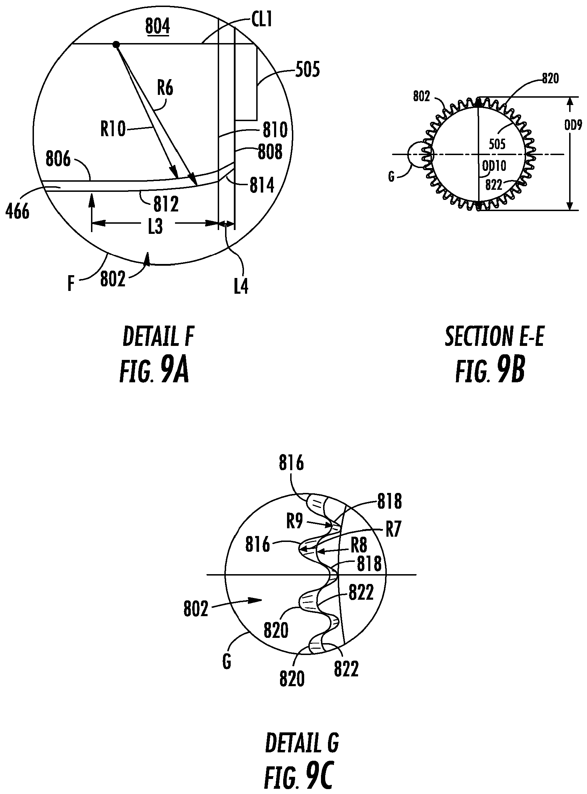

FIGS. 9-9C schematically illustrates a portion of a joint assembly 800 having a shaft portion installation aid 802 according to an alternative embodiment of the invention. The joint assembly 800 illustrated in FIGS. 9-9C is the same as the joint assemblies 400, 600, 700 and 750 illustrated in FIGS. 5-8, except where specifically noted below. As best seen in FIG. 9A and as a non-limiting example, the joint assembly 800 includes a second joint member 804 having the plurality of axially extending shaft portion splines 466 on the shaft portion 458 of the second joint member 804. At least a portion of the second end portion 470 of the plurality of axially extending shaft portion splines 466 of the second joint member 804 includes the shaft portion installation aid 802. It is within the scope of this invention and as a non-limiting example that the shaft portion installation aid 802 of the second joint member 804 may be formed at the same time as the plurality of axially extending shaft portion splines 466 are formed or the shaft portion installation aid 802 may be formed as a result of one or more subsequent processes after the formation of the plurality of axially extending shaft portion splines 466.

As best seen in FIG. 9A and as a non-limiting example, the shaft portion installation aid 802 of the joint assembly 800 includes a first end 806, a second end 808 and a transition portion 810 interposed between the first end 806 and the second end 808 of the shaft portion installation aid 802. Additionally as best seen in FIG. 9A and as a non-limiting example, the shaft portion installation aid 802 of the second joint member 804 has a first portion 812 and a second portion 814. The first portion 812 of the shaft portion installation aid 802 of the plurality of axially extending shaft portion splines 466 has a length L3 that extends from the first end 806 to the transition portion 810 of the shaft portion installation aid 802 and the second portion 814 of the shaft portion installation aid 802 has a length L4 that extends from the transition portion 810 to the second end 808 of the shaft portion installation aid 802 of the joint assembly 800. In accordance with the embodiment of the invention illustrated in FIG. 9A and as a non-limiting example, the second portion 814 of the shaft portion installation aid 802 is disposed axially outboard from and adjacent to the first portion 812 of the shaft portion installation aid 802. It is therefore to be understood that the transition portion 810 of the shaft portion installation aid 802 of the plurality of axially extending shaft portion splines 466 defines the point at which the first portion 812 transitions to the second portion 814 of the shaft portion installation aid 802. As a non-limiting example, the length L3 of the first portion 812 of the shaft portion installation aid 802 is larger than the length L4 of the second portion 814 of the shaft portion installation aid 802 of the second joint member 808. It is within the scope of this invention and as a non-limiting example, the length L3 of the first portion 812 of the shaft portion installation aid 802 is at least twice as long as the length L4 of the second portion 814 of the shaft portion installation aid 802.

It is within the scope of this invention and as a non-limiting example that the shaft portion installation aid 802 of the second end portion 470 of the plurality of axially extending shaft portion splines 466 may be cast as part of the second joint member 804, machined into the second end portion 470 of the plurality of axially extending shaft portion splines 466, cold forged into the plurality of axially extending shaft portion splines 466 and/or heat forged into the plurality of axially extending shaft portion splines 466 of the second joint member 804. As a result, it is to be understood that the first portion 812 and/or the second portion 814 of the shaft portion installation aid 802 of the plurality of axially extending shaft portion splines 466 may be cast as part of the second joint member 804, machined into the second end portion 470 of the plurality of axially extending shaft portion splines 466, cold forged into the plurality of axially extending shaft portion splines 466 and/or heat forged into the plurality of axially extending shaft portion splines 466 of the second joint member 804.

As best seen in FIG. 9B and as a non-limiting example, the plurality of axially extending shaft portion splines 466 at the first end 806 of the shaft portion installation aid 802 have an outermost diameter OD9 that is substantially equal to the outermost diameter OD1 of the plurality of axially extending shaft portion splines 466. Additionally, as best seen in FIG. 9B and as a non-limiting example, the plurality of axially extending shaft portion splines 466 at the transition portion 810 of the shaft portion installation aid 802 have an outermost diameter OD10 that is less than the outer diameter OD9 of the plurality of axially extending shaft portion splines 466 at the first end 806 of the shaft portion installation aid 802. Furthermore, the outermost diameter OD10 of the plurality of axially extending shaft portion splines 466 at the transition portion 810 of the shaft portion installation aid 802 is greater than the outer diameter OD2 of the first end portion 460 of the shaft portion 458 of the second joint member 804.

The plurality of axially extending shaft portion splines 466 of the first portion 812 of the shaft portion installation aid 802 have an outermost diameter that is defined by a radius R6 from the centerline CL1 of the joint assembly 800. In accordance with the embodiment of the invention illustrated in FIG. 9A and as a non-limiting example, the outermost diameter of the plurality of axially extending shaft portion splines 466 at the first portion 812 of the shaft portion installation aid 802 decreases from the first end 806 to the transition portion 810 of the shaft portion installation aid 802. As a result, it is to be understood that the plurality of axially extending shaft portion splines 466 of the first portion 812 of the shaft portion installation aid 802 have an outermost diameter that decreases at a non-constant rate from the first end 806 to the transition portion 810 of the shaft portion installation aid 802 of the second joint member 804 of the joint assembly 800.

According to an alternative embodiment of the invention (not shown) and as a non-limiting example, the plurality of axially extending shaft portion splines 466 of the first portion 812 of the shaft portion installation aid 802 may have an outermost diameter that decreases at a substantially constant rate from the first end 806 to the transition portion 810 of the shaft portion installation aid 802. In accordance with this embodiment of the invention (not shown) and as a non-limiting example, the outermost diameter of the plurality of axially extending shaft portion splines 466 is not defined by the radius R6 illustrated in FIG. 9A. It is therefore to be understood that the outermost diameter of the plurality of axially extending shaft portion splines 466 of the first portion 812 of the shaft portion installation aid 802 will decrease from the first end 806 to the transition portion 810 at an angle (not shown) relative to the centerline CL1 of the joint assembly 800.

In accordance with a further embodiment of the invention and as a non-limiting example, the plurality of axially extending shaft portion splines 466 of the first portion 812 of the shaft portion installation aid 802 may have a shape and geometry that is approximately 10×10^{o}.

As best seen in FIG. 9A and as a non-limiting example, the plurality of axially extending shaft portion splines 466 of the second portion 814 of the shaft portion installation aid 802 have an outermost diameter that decreases from the transition portion 810 to the second end 808 of the shaft portion installation aid 802. In accordance with the embodiment of the invention illustrated in FIG. 9A and as a non-limiting example, the outermost diameter of the plurality of axially extending shaft portion splines 466 of the second portion 814 of the shaft portion installation aid 802 decreases at a faster rate than the outermost diameter of the plurality of axially extending shaft portion splines 466 of the first portion 812 of the shaft portion installation aid 802. It is within the scope of this invention and as a non-limiting example that the outermost diameter of the plurality of axially extending shaft portion splines 466 of the second portion 814 of the shaft portion installation aid 802 may decrease at a substantially constant rate from the transition portion 810 of the shaft portion installation aid 802 to the second end 808 of the shaft portion installation aid 802. As a result, in accordance with the embodiment of the invention illustrated in FIG. 9 and as a non-limiting example, the outermost diameter of the plurality of axially extending shaft portion splines 466 of the second portion 814 of the shaft portion installation aid 802 decreases at an angle θ2 relative to the centerline CL1 of the joint assembly 800. It is within the scope of this invention and as a non-limiting example that the second portion 814 of the shaft portion installation aid 802 may be a chamfer portion where the angle θ2 is from approximately 35° to approximately 55°.

According to an alternative embodiment of the invention (not shown) and as a non-limiting example, the outermost diameter of the plurality of axially extending shaft portion splines 466 of the second portion 814 of the shaft portion installation aid 802 may decrease at a non-constant rate from the transition portion 810 of the shaft portion installation aid 802 to the second end 808 of the shaft portion installation aid 802. As a result, in accordance with this embodiment of the invention (not shown) and as a non-limiting example, the outermost diameter of the plurality of axially extending shaft portion splines 466 will not decrease from the transition portion 810 of the shaft portion installation aid 802 to second end 808 of the shaft portion installation aid 802 at the angle θ2 relative to the centerline CL1 of the joint assembly 800. In accordance with this embodiment of the invention (not shown) and as a non-limiting example, the outermost diameter of the plurality of axially extending shaft portion splines 466 of the second portion 814 of the shaft portion installation aid 802 are defined by a radius (not shown).

The plurality of axially extending shaft portion splines 466 of the second joint member 804 define a plurality of peaks 816 and a plurality of valleys 818. As best seen in FIG. 9C and as a non-limiting example, the outer surface 434 of the plurality of axially extending shaft portion spines 466 of the first portion 812 of the shaft portion installation aid 802 has a plurality of peaks 820 that are defined by a radius R7. Additionally, as best seen in FIG. 9C and as a non-limiting example, the outer surface 434 of the plurality of axially extending shaft portion splines 466 of the second portion 814 of the shaft portion installation aid 802 has a plurality of peaks 822 that are defined by a radius R8. It is within the scope of this invention and as a non-limiting example that the radius R7 of the plurality of axially extending shaft portion splines 466 of the first portion 812 of the shaft portion installation aid 802 may be substantially equal to the radius R8 of the plurality of axially extending shaft portion splines 466 of the second portion 814 of the shaft portion installation aid 802.

In accordance with the embodiment of the invention illustrated in FIG. 5D and as a non-limiting example, the plurality of valleys 818 of the plurality of axially extending shaft portion splines 466 of the first and second portions 812 and 814 of the shaft portion installation aid 802 are defined by a radius R9. As a result, it is to be understood that the outer surface 434 of the plurality of axially extending shaft portion splines 466 of the shaft portion installation aid 802 of the second joint member 804 have a substantially continuous arcuate or curved shape that is defined by a plurality of radii. According to an embodiment of the invention and as a non-limiting example, the radius R9 of the plurality of valleys 818 of the plurality of axially extending shaft portion splines 466 of the first and second portions 812 and 814 of the shaft portion installation aid 802 may be substantially equal to or greater than the radii R7 and/or R8 of the plurality of axially extending shaft portion splines 466 of the first and/or second portions 812 and/or 814 of the shaft portion installation aid 802. In accordance with an alternative embodiment of the invention and as a non-limiting example, the radius R9 of the plurality of valleys 818 of the plurality of axially extending shaft portion splines 466 of the first and second portions 812 and 814 of the shaft portion installation aid 802 may be substantially equal to or less than the radii R7 and/or R8 of the plurality of axially extending shaft portion splines 466 of the first and/or second portions 812 and/or 814 of the shaft portion installation aid 802.

The shaft portion installation aid 802 of the plurality of axially extending shaft portion splines 466 of the second joint member 804 according to the embodiment of the invention illustrated in FIGS. 9-9c provides an inner diameter type fit for the second joint member 804 with in the shaft 482 of the joint assembly 800. In accordance with this embodiment of the invention and as a non-limiting example, the plurality of valleys 818 of the plurality of axially extending shaft portion splines 466 of the first portion 812 and/or the second portion 814 of the shaft portion installation aid 802 have an innermost diameter that is defined by a radius R10 from the centerline CL1 of the joint assembly 800. As a result, the innermost diameter of the plurality of axially extending shaft portion splines 466 of the first and/or second portions 812 and/or 814 of the shaft portion installation aid 802 decreases from the first end 806 to the second end 808 of the shaft portion installation aid 802. This provides a plurality of axially extending shaft portion splines 466 with an innermost diameter that is variable and non-constant across the length of the plurality of axially extending shaft portion splines 466. By making the second joint member 804 with the plurality of axially extending shaft portion splines 466 having the shaft portion installation aid 802 described herein, it aids in reducing the overall costs associated with assembly of the joint assembly 800. This is achieved by allowing the shaft portion 458 of the second joint member 804 to be inserted within the shaft 482 without requiring exact alignment of the second joint member 804 relative to the shaft 482 making assembly easier, faster and more cost efficient for the joint assembly 800.

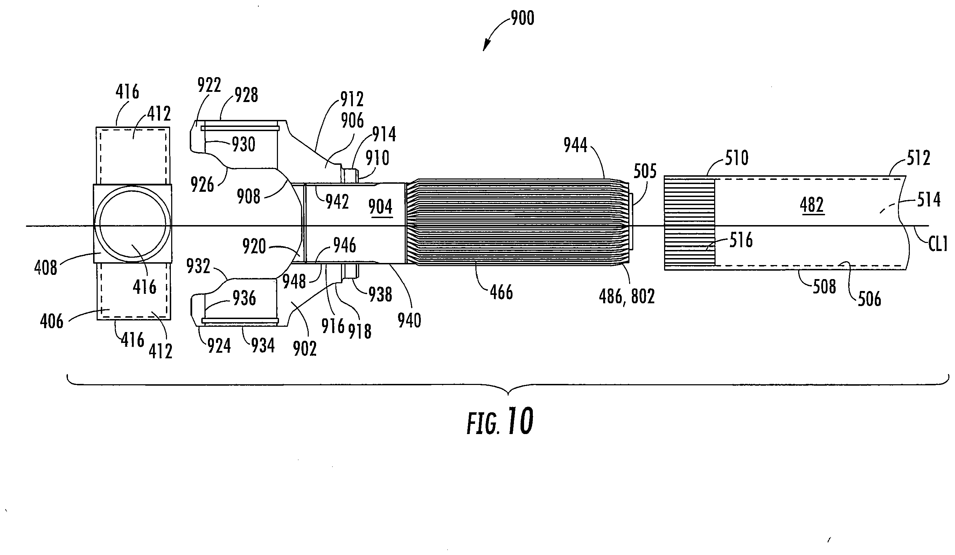

FIG. 10 is a partial cut-away exploded schematic side-view of a portion of a joint assembly 900 according to still a further embodiment of the invention. The joint assembly 900 illustrated in FIG. 10 is the same as the joint assemblies 400, 600, 700, 750 and 800 illustrated in FIGS. 5-9C, except where specifically noted below. As illustrated in FIG. 10 and as a non-limiting example, the second joint member 902 of the joint assembly 900 has a separable shaft portion 904 that is drivingly connected to at least a portion of the second joint member 902. The second joint member 902 of the joint assembly 900 has body portion 906 having a first end 908, a second end 910, a first end portion 912, a second end portion 914, an inner surface 916 and an outer surface 918. The inner surface 916 and the outer surface 918 of the body portion 906 of the second joint member 902 defines a hollow portion 920 therein.

Extending axially outboard from at least a portion of the outer surface 918 of the first end portion 912 of the body portion 906 of the second joint member 902, toward the third joint member 406 of the joint assembly 900, is a first axially extending yoke arm or ear 922 and a second axially extending yoke arm or ear 924. As best seen in FIG. 10 and as a non-limiting example, the first axially extending yoke arm or ear 922 of the second joint member 902 has a first side 926 and a second side 928. One or more openings 930 extend from the first side 926 to the second side 928 of the first axially extending yoke arm or ear 922 of the second joint member 902 of the joint assembly 900. The one or more openings 930 in the first axially extending yoke arm or ear 922 of the second joint member 902 are of a size and shape to receive and/or retain at least a portion of the bearing cap 416 and the plurality of trunnions 412 of the third joint member 406. As a result, at least a portion of the bearing cap 416 disposed along the outer surface 410 of the plurality of trunnions 412 of the third joint member 406 are disposed within the one or more openings 930 in the first axially extending yoke arm or ear 922 of the second joint member 902 of the coupling assembly 900.

As best seen in FIG. 10 and as a non-limiting example, the second axially extending yoke arm or ear 924 of the second joint member 902 has a first side 932 and a second side 934. Extending from the first side 932 to the second side 934 of the second axially extending yoke arm 924 of the second joint member 902 is one or more openings 936. The one or more openings 936 in the second axially extending yoke arm or ear 924 are aligned with the one or more openings 930 in the first axially extending yoke arm or ear 922 of the second joint member 902. Additionally, the one or more openings 936 of the second axially extending yoke arm 924 of the second joint member 902 are of a size and shape to receive and/or retain at least a portion of bearing cap 416 and the plurality of trunnions 412 of the third joint member 406. As a result, at least a portion of the bearing cap 416 disposed along the outer surface 410 of the plurality of trunnions 412 of the third joint member 406 are disposed within the one or more openings 936 in the second axially extending yoke arm or ear 924 of the second joint member 902 of the coupling assembly 900.

At least a portion of the second end portion 914 of the body portion 906 of the second joint member 902 includes a substantially cylindrical portion 938. It is within the scope of this invention and as a non-limiting example that the substantially cylindrical portion 938 of the body portion 906 of the second joint member 902 may provide a mounting and/or attachment surface for at least a portion of an end of a flexible boot of a flexible boot assembly (not shown).

Extending co-axially with at least a portion of the second joint member 902 of the joint assembly 900 is the shaft portion 904. As illustrated in FIG. 10 and as a non-limiting example, the shaft portion 904 of the joint assembly 900 has an outer surface 940, a first end portion 942 and a second end potion 944. At least a portion of the first end portion 942 of the shaft portion 904 of the joint assembly 900 is drivingly connected to at least a portion of the body portion 906 of the second joint member 902. It is within the scope of this invention and as a non-limiting example that the first end portion 942 of the shaft portion 904 may be drivingly connected to the body portion 906 of the second joint member 902 by using one or more welds, one or more mechanical fasteners, one or more adhesives and/or a threaded connection.

In accordance with the embodiment of the invention illustrated in FIG. 10 and as a non-limiting example, circumferentially extending from at least a portion of the outer surface 940 of the first end portion 942 of the shaft portion 904 is a second plurality of axially extending shaft portion splines 946. The second plurality of axially extending shaft portion splines 946 of the shaft portion 904 are complementary to and meshingly engaged with a plurality of axially extending second joint member splines 948 circumferentially extending from at least a portion of the inner surface 916 of the body portion 906 of the second joint member 902.

As illustrated in FIG. 10 and as a non-limiting example, the shaft portion 904 of the joint assembly 900 incudes the plurality of axially extending shaft portion splines 466 circumferentially extending from at least a portion of the outer surface 940 of the shaft portion 902. The plurality of axially extending shaft portion splines 466 of the shaft portion 904 of the joint assembly 900 are complementary to and meshingly engaged with the plurality of axially extending shaft splines 516 of the shaft 482 thereby drivingly connecting the shaft portion 904 and the second joint member 902 to the shaft 482 of the joint assembly 900. It is within the scope of this invention and as a non-limiting example that the second end portion 470 of the plurality of axially extending shaft portion splines 466 of the shaft portion 904 of the joint assembly 900 include the use of the shaft portion installation aid 486 or 802 illustrated in FIGS. 5-9 and as described herein.

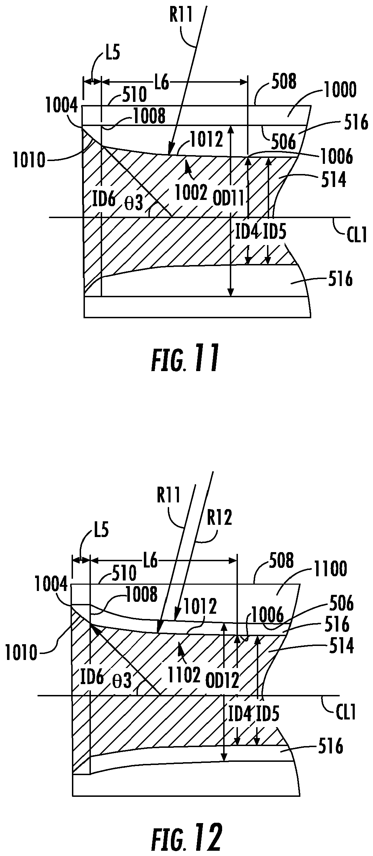

FIG. 11 schematically illustrates a portion of a shaft 1000 having a shaft installation aid 1002 according to an embodiment of the invention. The shaft installation aid 1002 of the shaft 1000 illustrated in FIG. 11 is the same as the shaft portion installation aids 486 and 802 of the shaft portions 458 and 904 illustrated in FIGS. 5-10, except where specifically noted below. As illustrated in FIG. 11 and as a non-limiting example, the shaft installation aid 1002 is disposed within at least a portion of the first end portion 510 of the plurality of axially extending shaft splines 516 circumferentially extending from the inner surface 506 of the shaft 1000. It is within the scope of this invention and as a non-limiting example that the shaft installation aid 1002 of the shaft 1000 may be formed at the same time as the plurality of axially extending shaft splines 516 are formed or the shaft installation aid 1002 may be formed as a result of one or more subsequent
processes after the formation of the plurality of axially extending shaft splines 516.

As illustrated in FIG. 11 and as a non-limiting example, the shaft installation aid 1002 of the shaft 1000 has a first end 1004, a second end 1006 and an transition portion 1008. The transition portion 1008 of the shaft installation aid 1002 of the shaft 1000 is interposed between the first and second ends 1004 and 1006 of the shaft installation aid 1002. Additionally, as illustrated in FIG. 11 and as a non-limiting example, the shaft installation aid 1002 of the shaft 1000 further includes a first portion 1010 and a second portion 1012. The first portion 1010 of the shaft installation aid 1002 of the plurality of axially extending shaft splines 516 has a length L5 that extends from the first end 1004 to the transition portion 1008 of the shaft installation aid 1002 and the second portion 1012 of the shaft installation aid 1002 has a length L6 that extends from the transition portion 1008 to the second end 1006 of the shaft installation aid 1002 of the shaft 1000. In accordance with the embodiment of the invention illustrated in FIG. 11 and as a non-limiting example, the first portion 1010 of the shaft installation aid 1002 is disposed axially outboard from and adjacent to the second portion 1012 of the shaft installation aid 1002. It is therefore to be understood that the transition portion 1008 of the shaft installation aid 1002 of the plurality of axially extending shaft splines 516 defines the point at which the first portion 1010 transitions to the second portion 1012 of the shaft installation aid 1002. As a non-limiting example, the length L6 of the second portion 1012 of the shaft installation aid 1002 is larger than the length L5 of the first portion 1010 of the shaft installation aid 1002 of the shaft 1000. It is within the scope of this invention and as a non-limiting example, the length L6 of the second portion 1012 of the shaft installation aid 1002 is at least twice as long as the length L5 of the first portion 1010 of the shaft installation aid 1002.

As illustrated in FIG. 11 and as a non-limiting example, the plurality of axially extending shaft splines 516 at the second end 1006 of the shaft installation aid 1002 have an innermost diameter ID4 that is substantially equal to an innermost diameter ID5 of the plurality of axially extending shaft splines 516. Additionally, as illustrated in FIG. 11 and as a non-limiting example, the plurality of axially extending shaft splines 516 at the transition portion 1008 of the shaft installation aid 1002 have an innermost diameter ID6 that is greater than the innermost diameter ID4 of the plurality of axially extending shaft splines 516 at the second end 1006 of the shaft installation aid 1002.

The plurality of axially extending shaft splines 516 of the second portion 1012 of the shaft installation aid 1002 have an innermost diameter that is defined by a radius R11. In accordance with the embodiment of the invention illustrated in FIG. 11 and as a non-limiting example, the innermost diameter of the plurality of axially extending shaft splines 516 at the second portion 1012 of the shaft installation aid 1002 increases from the second end 1006 to the transition portion 1008 of the shaft installation aid 1002. As a result, it is to be understood that the plurality of axially extending shaft splines 516 of the second portion 1006 of the shaft installation aid 1002 have an innermost diameter that increases at a non-constant rate from the second end 1006 to the transition portion 1008 of the shaft installation aid 1002 of the shaft 1000.

According to an alternative embodiment of the invention (not shown) and as a non-limiting example, the plurality of axially extending shaft splines 516 of the second portion 1012 of the shaft installation aid 1002 may have an innermost diameter that increases at a substantially constant rate from the second end 1006 to the transition portion 1008 of the shaft installation aid 1002. In accordance with this embodiment of the invention (not shown) and as a non-limiting example, the innermost diameter of the plurality of axially extending shaft splines 516 is not defined by the radius R11 illustrated in FIG. 11. It is therefore to be understood that the innermost diameter of the plurality of axially extending shaft splines 516 of the second portion 1012 of the shaft installation aid 1002 will increase from the second end 1006 to the transition portion 1008 at an angle (not shown) relative to the centerline CL1.

In accordance with a further embodiment of the invention and as a non-limiting example, the plurality of axially extending shaft splines 516 of the second portion 1012 of the shaft installation aid 1002 may have a shape and geometry that is approximately 10×10°.

As illustrated in FIG. 11 and as a non-limiting example, the plurality of axially extending shaft splines 516 of the first portion 1010 of the shaft installation aid 1002 have an innermost diameter that increases from the transition portion 1008 to the first end 1004 of the shaft installation aid 1002. In accordance with the embodiment of the invention illustrated in FIG. 11 and as a non-limiting example, the innermost diameter of the plurality of axially extending shaft splines 516 of the first portion 1010 of the shaft installation aid 1002 increases at a faster rate than the innermost diameter of the plurality of axially extending shaft splines 516 of the second portion 1012 of the shaft installation aid 1002. It is within the scope of this invention and as a non-limiting example that the innermost diameter of the plurality of axially extending shaft splines 516 of the first portion 1010 of the shaft installation aid 1002 may increase at a substantially constant rate from the transition portion 1008 of the shaft installation aid 1002 to the first end 1004 of the shaft installation aid 1002. As a result, in accordance with the embodiment of the invention illustrated in FIG. 11 and as a non-limiting example, the innermost diameter of the plurality of axially extending shaft splines 516 of the first portion 1010 of the shaft installation aid 1002 increases at an angle θ3 relative to the centerline CL1. It is within the scope of this invention and as a non-limiting example that the first portion 1010 of the shaft installation aid 1002 may be a chamfer portion where the angle θ3 is from approximately 35° to approximately 55°.

According to an alternative embodiment of the invention (not shown) and as a non-limiting example, the innermost diameter of the plurality of axially extending shaft splines 516 of the first portion 1010 of the shaft installation aid 1002 may increase at a non-constant rate from the transition portion 1008 of the shaft installation aid 1002 to the first end 1004 of the shaft installation aid 1002. As a result, in accordance with this embodiment of the invention (not shown) and as a non-limiting example, the innermost diameter of the plurality of axially extending shaft splines 516 will not increase from the transition portion 1008 of the shaft installation aid 1002 to first end 1004 of the shaft installation aid 1002 at the angle θ3 relative to the centerline CL1. In accordance with this embodiment of the invention (not shown) and as a non-limiting example, the innermost diameter of the plurality of axially extending shaft splines 516 of the first portion 1010 of the shaft installation aid 1002 are defined by a radius (not shown).

The shaft installation aid 1002 of the plurality of axially extending shaft splines 516 of the shaft 1000 provides an outer diameter type fit. In accordance with this embodiment of the invention and as a non-limiting example, the plurality of axially extending shaft splines 516 have a substantially continuous outermost diameter OD11 across the entire length of the plurality of axially extending shaft splines 516 of the shaft 1000. By making the shaft 1000 with the plurality of axially extending shaft splines 516 having the shaft installation aid 1002 described herein, it aids in reducing the overall costs associated with assembly of the joint assembly. This is achieved by allowing the shaft portion 458 or 940 of the second joint member 404 or 902 to be inserted within the shaft 1000 without requiring exact alignment of the shaft portion 458 or 940 relative to the shaft 1000 making assembly easier, faster and more cost efficient for the joint assembly.

According to an embodiment of the invention (not shown) and as a non-limiting example, the attachment adapter 764 may include the use of an installation aid (not shown) in at least a portion of the first end portion 766 of the plurality of axially extending attachment adapter splines 777 in the inner surface 770 of the attachment adapter 764. In accordance with this embodiment of the invention (not shown) and as a non-limiting example, the installation aid (not shown) in the plurality of axially extending attachment adapter splines 777 has the same geometry as the shaft installation aid 1002 previously described and illustrated in FIG. 11.

FIG. 12 schematically illustrates a portion of a shaft 1100 having a shaft installation aid 1102 according to an alternative embodiment of the invention. The shaft installation aid 1102 of the shaft 1100 illustrated in FIG. 12 is the same as the installation aids 486, 802 and 1002 illustrated in FIGS. 5-11, except where specifically noted below. As illustrated in FIG. 12 and as a non-limiting example, the shaft installation aid 1102 is disposed within at least a portion of the first end portion 510 of the plurality of axially extending shaft splines 516 circumferentially extending from the inner surface 506 of the shaft 1100. It is within the scope of this invention and as a non-limiting example that the shaft installation aid 1102 of the shaft 1100 may be formed at the same time as the plurality of axially extending shaft splines 516 are formed or the shaft installation aid 1102 may be formed as a result of one or more subsequent processes after the formation of the plurality of axially extending shaft splines 516.

The shaft installation aid 1102 of the plurality of axially extending shaft splines 516 of the shaft 1100 according to the embodiment of the invention illustrated in FIG. 12 provides an inner diameter type fit. In accordance with this embodiment of the invention and as a non-limiting example, the plurality of axially extending shaft splines 516 of the first and/or second portion 1010 and/or 1012 of the shaft installation aid 1102 has an outermost diameter OD12 defined by a radius R12. As a result, the outermost diameter OD12 of the plurality of axially extending shaft splines 516 of the first and/or second portions 1010 and/or 1012 of the shaft installation aid 1102 decreases from the first end 1104 to the second end 1106 of the shaft installation aid 1102. This provides a plurality of axially extending shaft splines 516 with an outermost diameter OD12 that is variable and non-constant across the length of the plurality of axially extending shaft splines 516. By making the shaft 1100 with the plurality of axially extending shaft splines 516 having the shaft installation aid 1102 described herein, it aids in reducing the overall costs associated with assembly of the joint assembly. This is achieved by allowing the shaft portion 458 or 940 of the second joint member 404 or 902 to be inserted within the shaft 1100 without requiring exact alignment of the shaft portion 458 or 940 relative to the shaft 1100 making assembly easier, faster and more cost efficient for the joint assembly.

According to an embodiment of the invention (not shown) and as a non-limiting example, the attachment adapter 764 may include the use of an installation aid (not shown) in at least a portion of the first end portion 766 of the plurality of axially extending attachment adapter splines 777 in the inner surface 770 of the attachment adapter 764. In accordance with this embodiment of the invention (not shown) and as a non-limiting example, the installation aid (not shown) in the plurality of axially extending attachment adapter splines 777 has the same geometry as the shaft installation aid 1102 previously described and illustrated in FIG. 12.

## Claims

1. A joint assembly (400), comprising:
a first joint member (402) drivingly connected to at least a portion of a second joint member (404) by a third joint member (406);
wherein said second joint member (404) has an outer surface (434), a first end portion (436), a second end portion (438) and an intermediate portion (440) interposed between said first and second end portions (436, 438) of said second joint member (404);
wherein a shaft portion (458) extends axially outboard from at least a portion of said outer surface (434) of said intermediate portion (440) of said second joint member (404);
wherein a plurality of axially extending shaft portion splines (466) circumferentially extend along at least a portion of said outer surface (434) of said shaft portion (458) of said second joint member (404);
wherein said plurality of axially extending shaft portion splines (466) of said shaft portion (458) of said second joint member (404) has a first end portion (468), a second end portion (470) and an intermediate portion (472) interposed between said first and second end portions (468, 470) of said plurality of axially extending shaft portion splines (466);
wherein at least a portion of said second end portion (470) of said plurality of axially extending shaft portion splines (466) has a shaft portion installation aid (486) having a first end (488), a second end (490) and a transition portion (492) interposed between said first and second ends (488, 490) of said shaft portion installation aid (486);
wherein said first end (488) to said transition portion (492) of said shaft portion installation aid (486) defines a first portion (494) of said shaft portion installation aid (486);
wherein said transition portion (492) to said second end (490) of said shaft portion installation aid (486) defines a second portion (496) of said shaft portion installation aid (486); and
wherein said outermost diameter of said plurality of axially extending shaft portion splines (466) of said first portion (494) and/or said second portion (496) of said shaft portion installation aid (486) is defined by a radius R2 from a centerline CL1 of said joint assembly (400),
wherein, in a cross sectional plane perpendicular to the axis of said shaft portion (458), said intermediate portion (472) of said plurality of axially extending shaft portion splines (466) has a substantially polygonal shape, and **characterised in that**,
in a cross sectional plane perpendicular to the axis of said shaft portion (458), said outer surface (434) of said plurality of axially extending shaft portion splines (466) of said shaft portion installation aid (486) has a continuous arcuate or curved shape that is defined by a plurality of radii.

2. The joint assembly (400) of claim 1, wherein said joint assembly (400) is a universal joint assembly, a U-joint assembly, a universal coupling assembly, a cardan joint assembly, a double cardan joint assembly, a Hooke's joint assembly, a Spicer joint assembly, a homokinetic coupling assembly, a constant velocity joint assembly or a Hardy Spicer joint assembly.

3. The joint assembly (400) of claim 1, wherein said outer surface (434) of said plurality of axially extending shaft portion splines (466) of said first portion (494) of said shaft portion installation aid (486) has a plurality of peaks (502) defined by a radius R3;
wherein said outer surface (434) of said plurality of axially extending shaft portion splines (466) of said second portion (496) of said shaft portion installation aid (486) has a plurality of peaks (504) defined by a radius R4; and
wherein said outer surface (434) of said plurality of axially extending shaft portion splines (466) of said first portion (494) and said second portion (496) of said shaft portion installation aid (486) has a plurality of valleys (500) defined by a radius R5.

4. The joint assembly (400) of claim 1, wherein said plurality of axially extending shaft portion splines (466) of said shaft portion (458) of said second joint member (404) have an innermost diameter ID1 that is substantially constant across said entire length of said plurality of axially extending shaft portion splines (466).

5. The joint assembly (400) of claim 1, wherein said plurality of axially extending shaft portion splines (466) of said first portion (494) and/or said second portion (496) of said shaft portion installation aid (486) of said second joint member (404) has an innermost diameter that is defined by a radius R10 from said centerline CL1 of said joint assembly (400) such that said innermost diameter defined by said radius R10 decreases from said first end (488) to said second end (490) of said shaft portion installation aid (486) of said second joint member (404).

6. The joint assembly of claim 1, wherein said plurality of axially extending shaft portions splines (466) at said first end (488) of said shaft portion installation aid (486) has an outermost diameter OD5;
wherein said plurality of axially extending shaft portion splines (466) at said intermediate portion (492) of said shaft portion installation aid (486) has an outermost diameter OD6; and
wherein said outermost diameter OD5 is greater than said outermost diameter OD6 of said plurality of axially extending shaft portion splines (466) of said second joint member (404).

7. The joint assembly (400) of claim 1, wherein said plurality of axially extending shaft portion splines (466) of said first portion (494) of said shaft portion installation aid (486) has a length L1;
wherein said plurality of axially extending shaft portion splines (466) of said second portion (496) of said shaft portion installation aid (486) has a length L2; and
wherein said length L1 of said first portion (494) of said shaft portion installation aid (486) is at least twice said length L2 of said second portion (496) of said shaft portion installation aid (486) of said plurality of axially extending shaft portion splines (466).

8. The joint assembly (400) of claim 1, further comprising a shaft (482) having a first end portion (510), a second end portion (512), an inner surface (506) and an outer surface (508);
wherein a plurality of axially extending shaft splines (516) circumferentially extend along at least a portion of said inner surface (506) of said shaft (582); and
wherein said plurality of axially extending shaft splines (516) on said inner surface (506) of said shaft (582) are complementary to and meshingly engaged with said plurality of axially extending shaft portion splines (466) on said outer surface (434) of said shaft portion (458) of said second joint member (404).

9. The joint assembly (400) of claim 8, further comprising a flexible boot (610) having a first end portion (616) and a second end portion (618);
wherein at least a portion of said first end portion (616) of said flexible boot (610) is connected to at least a portion of said outer surface (434) of said second joint member (404); and
wherein at least a portion of said second end portion (618) of said flexible boot (610) is connected to at least a portion of said outer surface (508) of said first end portion (510) of said shaft (582).

10. The joint assembly (400) of claim 8, further comprising a coating material (706); and
wherein said coating material (706) encapsulates at least a portion of said plurality of axially extending shaft portion splines (466) of said second joint member (404) and said plurality of axially extending shaft splines (516) of said shaft (842) of said joint assembly (400).

11. The joint assembly (400) of claim 8, wherein at least a portion of said plurality of axially extending shaft splines (516) of said first end portion (510) of said shaft (482) has a shaft installation aid (1002) having a first end (1004), a second end (1006) and a transition portion (1008) interposed between said first end (1004) and said second end (1006) of said shaft installation aid (1002);
wherein said first end (1004) to said transition portion (1008) of said shaft installation aid (1002) defines a first portion (1010) of said shaft installation aid (1002);
wherein said transition portion (1008) to said second end (1006) of said shaft installation aid (1002) defines a second portion (1012) of said shaft installation aid (486); and
wherein an innermost diameter of said plurality of axially extending shaft splines (516) of said first portion (1010) and/or said second portion (1012) of said shaft installation aid (1002) is defined by a radius R11.

12. The joint assembly (400) of claim 11, wherein said plurality of axially extending shaft splines (516) of said shaft (482) have an outermost diameter OD11 that is substantially constant across said entire length of said plurality of axially extending shaft splines (516).

13. The joint assembly (400) of claim 11, wherein said plurality of axially extending shaft splines (516) of said first portion (1010) and/or said second portion (1012) of said shaft installation aid (1002) of said shaft (482) has an outermost diameter OD12 that is defined by a radius R12 such that said outermost diameter OD12 defined by said radius R12 decreases from said first end (1004) to said second end (1006) of said shaft installation aid (1002).

14. The joint assembly (400) of claim 11, wherein said plurality of axially extending shaft splines (516) at said transition portion (1008) of said shaft installation aid (1002) has an innermost diameter ID6;
wherein said plurality of axially extending shaft splines (516) at said second end (1006) of said shaft installation aid (1002) has an innermost diameter ID4; and
wherein said innermost diameter ID6 is greater than said innermost diameter ID4 of said plurality of axially extending shaft splines (516) of said shaft (482); and/or
wherein said plurality of axially extending shaft splines (516) of said first portion of said shaft installation aid (1002) has a length L5;
wherein said plurality of axially extending shaft splines (516) of said second portion of said shaft installation aid (1002) has a length L6; and
wherein said length L6 of said second portion of said shaft installation aid (1002) of said shaft is at least twice said length L5 of said first portion of said shaft installation aid (1002) of said shaft.

15. The joint assembly (750) of claim 1, further comprising an attachment adapter (764) and a shaft (752);
wherein said attachment adapter (764) has a first end portion (766), a second end portion (468), an inner surface (770) and an outer surface (772);
wherein a plurality of axially extending attachment adapter splines (477) circumferentially extend along at least a portion of said inner surface (770) of said attachment adapter (764);
wherein said plurality of axially extending attachment adapter splines (477) of said attachment adapter (764) are complementary to and meshingly engaged with said plurality of axially extending shaft portion splines (466) of said shaft portion (458) of said second joint member (404);
wherein said shaft (752) has a first end portion (758), a second end portion (760), an inner surface (754) and an outer surface (756); and
wherein at least a portion of said first end portion (758) of said shaft (752) is integrally connected to at least a portion of said outer surface (772) of said attachment adapter (764).

## Patentansprüche

1. Verbindungsanordnung (400), umfassend:
ein erstes Verbindungselement (402), durch ein drittes Verbindungselement (406) treibend verbunden mit mindestens einem Abschnitt eines zweiten Verbindungselements (404);
wobei das zweite Verbindungselement (404) eine Außenfläche (434), einen ersten Endabschnitt (436), einen zweiten Endabschnitt (438) und einen Zwischenabschnitt (440), positioniert zwischen dem ersten und zweiten Endabschnitt (436, 438) des zweiten Verbindungselements (404), aufweist;
wobei sich ein Wellenabschnitt (458) axial außerhalb von mindestens einem Abschnitt der Außenfläche (434) des Zwischenabschnitts (440) des zweiten Verbindungselements (404) erstreckt;
wobei eine Vielzahl sich axial erstreckender Wellenabschnittkerbverzahnungen (466) sich umlaufend entlang mindestens eines Abschnitts der Außenfläche (434) des Wellenabschnitts (458) des zweiten Verbindungselements (404) erstreckt;
wobei die Vielzahl sich axial erstreckender Wellenabschnittkerbverzahnungen (466) des Wellenabschnitts (458) des zweiten Verbindungselements (404) einen ersten Endabschnitt (468), einen zweiten Endabschnitt (470) und einen Zwischenabschnitt (472), positioniert zwischen dem ersten und zweiten Endabschnitt (468, 470) der Vielzahl sich axial erstreckender Wellenabschnittkerbverzahnungen (466), aufweist;
wobei mindestens ein Abschnitt des zweiten Endabschnitts (470) der Vielzahl sich axial erstreckender Wellenabschnittkerbverzahnungen (466) eine Wellenabschnittinstallationshilfe (486) mit einem ersten Ende (488), einem zweiten Ende (490) und einem Übergangsabschnitt (492), positioniert zwischen dem ersten und zweiten Ende (488, 490) der Wellenabschnittinstallationshilfe (486), aufweist;
wobei das erste Ende (488) bis zum Übergangsabschnitt (492) der Wellenabschnittinstallationshilfe (486) einen ersten Abschnitt (494) der Wellenabschnittinstallationshilfe (486) definiert;
wobei der Übergangsabschnitt (492) bis zum zweiten Ende (490) der Wellenabschnittinstallationshilfe (486) einen zweiten Abschnitt (496) der Wellenabschnittinstallationshilfe (486) definiert; und
wobei der äußerste Durchmesser der Vielzahl sich axial erstreckender Wellenabschnittkerbverzahnungen (466) des ersten Abschnitts (494) und/oder des zweiten Abschnitts (496) der Wellenabschnittinstallationshilfe (486) durch einen Radius R2 von einer Mittellinie CL1 der Verbindungsanordnung (400) definiert ist,
wobei, in einer Querschnittsebene senkrecht zur Achse des Wellenabschnitts (458), der Zwischenabschnitt (472) der Vielzahl sich axial erstreckender Wellenabschnittkerbverzahnungen (466) eine im Wesentlichen Vieleckform aufweist, und
**dadurch gekennzeichnet, dass**, in einer Querschnittsebene senkrecht zur Achse des Wellenabschnitts (458), die Außenfläche (434) der Vielzahl sich axial erstreckender Wellenabschnittkerbverzahnungen (466) der Wellenabschnittinstallationshilfe (486) eine kontinuierliche gebogene oder gewölbte Form aufweist, die durch eine Vielzahl von Radien definiert ist.

2. Verbindungsanordnung (400) nach Anspruch 1, wobei die Verbindungsanordnung (400) eine Universalgelenkanordnung, eine U-Gelenkanordnung, eine Kreuzgelenkkupplungsanordnung, eine Kardangelenkanordnung, eine Doppelkardangelenkanordnung, eine Hooke-Gelenkanordnung, eine Spicer-Gelenkanordnung, eine homokinetische Gelenkanordnung, eine Gleichlaufgelenkanordnung oder eine Hardy-Spicer-Gelenkanordnung ist.

3. Verbindungsanordnung (400) nach Anspruch 1, wobei die Außenfläche (434) der Vielzahl sich axial erstreckender Wellenabschnittkerbverzahnungen (466) des ersten Abschnitts (494) der Wellenabschnittinstallationshilfe (486) eine Vielzahl von Spitzen (502), definiert durch einen Radius R3, aufweist;
wobei die Außenfläche (434) der Vielzahl sich axial erstreckender Wellenabschnittkerbverzahnungen (466) des zweiten Abschnitts (496) der Wellenabschnittinstallationshilfe (486) eine Vielzahl von Spitzen (504), definiert durch einen Radius R4, aufweist; und
wobei die Außenfläche (434) der Vielzahl sich axial erstreckender Wellenabschnittkerbverzahnungen (466) des ersten Abschnitts (494) und des zweiten Abschnitts (496) der Wellenabschnittinstallationshilfe (486) eine Vielzahl von Tälern (500), definiert durch einen Radius R5, aufweist.

4. Verbindungsanordnung (400) nach Anspruch 1, wobei die Vielzahl sich axial erstreckender Wellenabschnittkerbverzahnungen (466) des Wellenabschnitts (458) des zweiten Verbindungselements (404) einen innersten Durchmesser ID1, der über die gesamte Länge der Vielzahl sich axial erstreckender Wellenabschnittkerbverzahnungen (466) im Wesentlichen konstant ist, aufweist.

5. Verbindungsanordnung (400) nach Anspruch 1, wobei die Vielzahl sich axial erstreckender Wellenabschnittkerbverzahnungen (466) des ersten Abschnitts (494) und/oder des zweiten Abschnitts (496) der Wellenabschnittinstallationshilfe (486) des zweiten Verbindungselements (404) einen innersten Durchmesser aufweist, der durch einen Radius R10 von der Mittellinie CL1 der Verbindungsanordnung (400) definiert ist, sodass sich der durch den Radius R10 definierte innerste Durchmesser von dem ersten Ende (488) zum zweiten Ende (490) der Wellenabschnittinstallationshilfe (486) des zweiten Verbindungselements (404) verringert.

6. Verbindungsanordnung nach Anspruch 1, wobei die Vielzahl sich axial erstreckender Wellenabschnittkerbverzahnungen (466) am ersten Ende (488) der Wellenabschnittinstallationshilfe (486) einen äußersten Durchmesser OD5 aufweist;
wobei die Vielzahl sich axial erstreckender Wellenabschnittkerbverzahnungen (466) an dem Zwischenabschnitt (492) der Wellenabschnittinstallationshilfe (486) einen äußersten Durchmesser OD6 aufweist; und
wobei der äußerste Durchmesser OD5 größer als der äußerste Durchmesser OD6 der Vielzahl sich axial erstreckender Wellenabschnittkerbverzahnungen (466) des zweiten Verbindungselements (404) ist.

7. Verbindungsanordnung (400) nach Anspruch 1, wobei die Vielzahl sich axial erstreckender Wellenabschnittkerbverzahnungen (466) des ersten Abschnitts (494) der Wellenabschnittinstallationshilfe (486) eine Länge L1 aufweist;
wobei die Vielzahl sich axial erstreckender Wellenabschnittkerbverzahnungen (466) des zweiten Abschnitts (496) der Wellenabschnittinstallationshilfe (486) eine Länge L2 aufweist; und
wobei die Länge L1 des ersten Abschnitts (494) der Wellenabschnittinstallationshilfe (486) mindestens das Doppelte der Länge L2 des zweiten Abschnitts (496) der Wellenabschnittinstallationshilfe (486) der Vielzahl sich axial erstreckender Wellenabschnittkerbverzahnungen (466) beträgt.

8. Verbindungsanordnung (400) nach Anspruch 1, ferner umfassend eine Welle (482) mit einem ersten Endabschnitt (510), einem zweiten Endabschnitt (512), einer Innenfläche (506) und einer Außenfläche (508);
wobei eine Vielzahl sich axial erstreckender Wellenkerbverzahnungen (516) sich umlaufend entlang mindestens eines Abschnitts der Innenfläche (506) der Welle (582) erstreckt; und
wobei die Vielzahl der sich axial erstreckenden Wellenkerbverzahnungen (516) an der Innenfläche (506) der Welle (582) die Vielzahl sich axial erstreckender Wellenkerbverzahnungen (466) auf der Außenfläche (434) des Wellenabschnitts (458) des zweiten Verbindungselements (404) ergänzt und sich kämmend im Eingriff mit ihr befindet.

9. Verbindungsanordnung (400) nach Anspruch 8, ferner umfassend eine flexible Manschette (610) mit einem ersten Endabschnitt (616), einem zweiten Endabschnitt (618);
wobei mindestens ein Abschnitt des ersten Endabschnitts (616) der flexiblen Manschette (610) mit mindestens einem Abschnitt der Außenfläche (434) des zweiten Verbindungselements (404) verbunden ist; und
wobei mindestens ein Abschnitt des zweiten Endabschnitts (618) der flexiblen Manschette (610) mit mindestens einem Abschnitt der Außenfläche (508) des ersten Endabschnitts (510) der Welle (582) verbunden ist.

10. Verbindungsanordnung (400) nach Anspruch 8, ferner umfassend ein Beschichtungsmaterial (706); und
wobei das Beschichtungsmaterial (706) mindestens einen Abschnitt der Vielzahl sich axial erstreckender Wellenkerbverzahnungen (466) des zweiten Verbindungselements (404) und der Vielzahl sich axial erstreckender Wellenkerbverzahnungen (516) der Welle (842) der Verbindungsanordnung (400) ummantelt.

11. Verbindungsanordnung (400) nach Anspruch 8, wobei mindestens ein Abschnitt der Vielzahl sich axial erstreckender Wellenverzahnungen (516) der ersten Endabschnitts (510) der Welle (482) eine Welleninstallationshilfe (1002) mit einem ersten Ende (1004), einem zweiten Ende (1006) und einem Übergangsabschnitt (1008), positioniert zwischen dem ersten Ende (1004) und dem zweiten Ende (1006) der Wellenabschnittinstallationshilfe (1002), aufweist;
wobei das erste Ende (1004) bis zum Übergangsabschnitt (1008) der Welleninstallationshilfe (1002) einen ersten Abschnitt (1010) der Welleninstallationshilfe (1002) definiert;
wobei der Übergangsabschnitt (1008) bis zum zweiten Ende (1006) der Welleninstallationshilfe (1002) einen zweiten Abschnitt (1012) der Welleninstallationshilfe (486) definiert; und
wobei ein innerster Durchmesser der Vielzahl sich axial erstreckender Wellenverzahnungen (516) des ersten Abschnitts (1010) und/oder des zweiten Abschnitts (1012) der Welleninstallationshilfe (1002) durch einen Radius R11 definiert ist.

12. Verbindungsanordnung (400) nach Anspruch 11, wobei die Vielzahl sich axial erstreckender Wellenkerbverzahnungen (516) der Welle (482) einen äußersten Durchmesser OD11 aufweist, der über die gesamte Länge der Vielzahl sich axial erstreckender Wellenkerbverzahnungen (516) im Wesentlichen konstant ist.

13. Verbindungsanordnung (400) nach Anspruch 11, wobei die Vielzahl sich axial erstreckender Wellenkerbverzahnungen (516) des ersten Abschnitts (1010) und/oder des zweiten Abschnitts (1012) der Welleninstallationshilfe (1002) der Welle (482) einen äußersten Durchmesser OD12 aufweist, der durch einen Radius R12 definiert ist, sodass sich der durch den Radius R12 definierte äußerste Durchmesser OD12 von dem ersten Ende (1004) zum zweiten Ende (1006) der Welleninstallationshilfe (1002) verringert.

14. Verbindungsanordnung (400) nach Anspruch 11, wobei die Vielzahl sich axial erstreckender Wellenkerbverzahnungen (516) am Übergangsabschnitt (1008) der Welleninstallationshilfe (1002) einen innersten Durchmesser ID6 aufweist;
wobei die Vielzahl sich axial erstreckender Wellenkerbverzahnungen (516) an dem zweiten Ende (1006) der Welleninstallationshilfe (1002) einen innersten Durchmesser ID4 aufweist; und
wobei der innerste Durchmesser ID6 größer als der innerste Durchmesser ID4 der Vielzahl sich axial erstreckender Wellenkerbverzahnungen (516) der Welle (482) ist; und/oder
wobei die Vielzahl sich axial erstreckender Wellenkerbverzahnungen (516) des ersten Abschnitts der Welleninstallationshilfe (1002) eine Länge L5 aufweist;
wobei die Vielzahl sich axial erstreckender Wellenkerbverzahnungen (516) des zweiten Abschnitts der Welleninstallationshilfe (1002) eine Länge L6 aufweist; und
wobei die Länge L6 des zweiten Abschnitts der Welleninstallationshilfe (1002) der Welle mindestens das Doppelte der Länge L5 des ersten Abschnitts der Welleninstallationshilfe (1002) der Welle beträgt.

15. Verbindungsanordnung (750) nach Anspruch 1, ferner umfassend einen Befestigungsadapter (764) und eine Welle (752);
wobei der Befestigungsadapter (764) einen ersten Endabschnitt (766), einen zweiten Endabschnitt (468), eine Innenfläche (770) und eine Außenfläche (772) aufweist;
wobei eine Vielzahl sich axial erstreckender Befestigungsadapterkerbverzahnungen (477) sich umlaufend entlang mindestens eines Abschnitts der Innenfläche (770) des Befestigungsadapters (764) erstreckt;
wobei die Vielzahl sich axial erstreckender Befestigungsadapterkerbverzahnungen (477) des Befestigungsadapters (764) die Vielzahl sich axial erstreckender Wellenabschnittkerbverzahnungen (466) des Wellenabschnitts (458) des zweiten Verbindungselements (404) ergänzt und sich kämmend im Eingriff mit ihr befindet;
wobei die Welle (752) einen ersten Endabschnitt (758), einen zweiten Endabschnitt (760), eine Innenfläche (754) und eine Außenfläche (756) aufweist; und
wobei mindestens ein Abschnitt des ersten Endabschnitts (758) der Welle (752) mit mindestens einem Abschnitt der Außenfläche (772) des Befestigungsadapters (764) einstückig verbunden ist.

## Revendications

1. Ensemble d'articulation (400), comprenant :
un premier élément d'articulation (402) qui est connecté en termes d'entraînement à au moins une partie d'un deuxième élément d'articulation (404) au moyen d'un troisième élément d'articulation (406) ; dans lequel :
ledit deuxième élément d'articulation (404) comporte une surface externe (434), une première partie d'extrémité (436), une seconde partie d'extrémité (438) et une partie intermédiaire (440) qui est interposée entre lesdites première et seconde parties d'extrémité (436, 438) dudit deuxième élément d'articulation (404) ; dans lequel :
une partie d'arbre (458) est étendue axialement de façon externe depuis au moins une partie de ladite surface externe (434) de ladite partie intermédiaire (440) dudit deuxième élément d'articulation (404) ; dans lequel :
des cannelures d'une pluralité de cannelures de partie d'arbre s'étendant axialement (466) sont étendues de façon circonférentielle le long d'au moins une partie de ladite surface externe (434) de ladite partie d'arbre (458) dudit deuxième élément d'articulation (404) ; dans lequel :
ladite pluralité de cannelures de partie d'arbre s'étendant axialement (466) de ladite partie d'arbre (458) dudit deuxième élément d'articulation (404) comporte une première partie d'extrémité (468), une seconde partie d'extrémité (470) et une partie intermédiaire (472) qui est interposée entre lesdites première et seconde parties d'extrémité (468, 470) de ladite pluralité de cannelures de partie d'arbre s'étendant axialement (466) ; dans lequel :
au moins une partie de ladite seconde partie d'extrémité (470) de ladite pluralité de cannelures de partie d'arbre s'étendant axialement (466) comporte un moyen d'aide à l'installation de partie d'arbre (486) qui comporte une première extrémité (488), une seconde extrémité (490) et une partie de transition (492) qui est interposée entre lesdites première et seconde extrémités (488, 490) dudit moyen d'aide à l'installation de partie d'arbre (486) ; dans lequel :
depuis ladite première extrémité (488) jusqu'à ladite partie de transition (492) dudit moyen d'aide à l'installation de partie d'arbre (486), une première partie (494) dudit moyen d'aide à l'installation de partie d'arbre (486) est définie ; dans lequel :
depuis ladite partie de transition (492) jusqu'à ladite seconde extrémité (490) dudit moyen d'aide à l'installation de partie d'arbre (486), une seconde partie (496) dudit moyen d'aide à l'installation de partie d'arbre (486) est définie ; dans lequel :
ledit diamètre le plus externe de ladite pluralité de cannelures de partie d'arbre s'étendant axialement (466) de ladite première partie (494) et/ou de ladite seconde partie (496) dudit moyen d'aide à l'installation de partie d'arbre (486) est défini par un rayon R2 qui est tracé par rapport à et depuis une ligne centrale CL1 dudit ensemble d'articulation (400) ; et dans lequel :
selon un plan en coupe transversale qui est perpendiculaire à l'axe de ladite partie d'arbre (458), ladite partie intermédiaire (472) de ladite pluralité de cannelures de partie d'arbre s'étendant axialement (466) présente une forme sensiblement polygonale ; et
**caractérisé en ce que**, selon un plan en coupe transversale qui est perpendiculaire à l'axe de ladite partie d'arbre (458), ladite surface externe (434) de ladite pluralité de cannelures de partie d'arbre s'étendant axialement (466) dudit moyen d'aide à l'installation de partie d'arbre (486) présente une forme arquée ou incurvée continue qui est définie par une pluralité de rayons.

2. Ensemble d'articulation (400) tel que revendiqué selon la revendication 1, dans lequel ledit ensemble d'articulation (400) est un ensemble d'articulation universelle ou de joint universel, un ensemble d'articulation ou de joint en U, un ensemble de couplage ou d'accouplement/de raccordement universel, un ensemble d'articulation ou de joint de cardan, un ensemble d'articulation ou de joint de cardan double, un ensemble d'articulation ou de joint de Hooke, un ensemble d'articulation ou de joint de Spicer, un ensemble de couplage ou d'accouplement/de raccordement homocinétique, un ensemble d'articulation ou de joint à vitesse constante ou un ensemble d'articulation ou de joint de Hardy-Spicer.

3. Ensemble d'articulation (400) tel que revendiqué selon la revendication 1, dans lequel : ladite surface externe (434) de ladite pluralité de cannelures de partie d'arbre s'étendant axialement (466) de ladite première partie (494) dudit moyen d'aide à l'installation de partie d'arbre (486) comporte une pluralité de crêtes (502) qui sont définies par un rayon R3 ; dans lequel :
ladite surface externe (434) de ladite pluralité de cannelures de partie d'arbre s'étendant axialement (466) de ladite seconde partie (496) dudit moyen d'aide à l'installation de partie d'arbre (486) comporte une pluralité de crêtes (504) qui sont définies par un rayon R4; et dans lequel :
ladite surface externe (434) de ladite pluralité de cannelures de partie d'arbre s'étendant axialement (466) de ladite première partie (494) et de ladite seconde partie (496) dudit moyen d'aide à l'installation de partie d'arbre (486) comporte une pluralité de vallées (500) qui sont définies par un rayon R5.

4. Ensemble d'articulation (400) tel que revendiqué selon la revendication 1, dans lequel les cannelures de ladite pluralité de cannelures de partie d'arbre s'étendant axialement (466) de ladite partie d'arbre (458) dudit deuxième élément d'articulation (404) présentent un diamètre le plus interne ID1 qui est sensiblement constant sur la totalité de ladite longueur de ladite pluralité de cannelures de partie d'arbre s'étendant axialement (466).

5. Ensemble d'articulation (400) tel que revendiqué selon la revendication 1, dans lequel les cannelures de ladite pluralité de cannelures de partie d'arbre s'étendant axialement (466) de ladite première partie (494) et/ou de ladite seconde partie (496) dudit moyen d'aide à l'installation de partie d'arbre (486) dudit deuxième élément d'articulation (404) présentent un diamètre le plus interne qui est défini par un rayon R10 qui est tracé par rapport à et depuis ladite ligne centrale CL1 dudit ensemble d'articulation (400) de telle sorte que ledit diamètre le plus interne qui est défini par ledit rayon R10 diminue depuis ladite première extrémité (488) jusqu'à ladite seconde extrémité (490) dudit moyen d'aide à l'installation de partie d'arbre (486) dudit deuxième élément d'articulation (404).

6. Ensemble d'articulation tel que revendiqué selon la revendication 1, dans lequel : ladite pluralité de cannelures de partie d'arbre s'étendant axialement (466) au niveau de ladite première extrémité (488) dudit moyen d'aide à l'installation de partie d'arbre (486) présente un diamètre le plus externe OD5 ;
dans lequel : ladite pluralité de cannelures de partie d'arbre s'étendant axialement (466) au niveau de ladite partie intermédiaire (492) dudit moyen d'aide à l'installation de partie d'arbre (486) présente un diamètre le plus externe OD6 ; et
dans lequel : ledit diamètre le plus externe OD5 est plus grand que ledit diamètre le plus externe OD6 de ladite pluralité de cannelures de partie d'arbre s'étendant axialement (466) dudit deuxième élément d'articulation (404).

7. Ensemble d'articulation (400) tel que revendiqué selon la revendication 1, dans lequel : ladite pluralité de cannelures de partie d'arbre s'étendant axialement (466) de ladite première partie (494) dudit moyen d'aide à l'installation de partie d'arbre (486) présente une longueur L1 ; dans lequel :
ladite pluralité de cannelures de partie d'arbre s'étendant axialement (466) de ladite seconde partie (496) dudit moyen d'aide à l'installation de partie d'arbre (486) présente une longueur L2 ; et dans lequel :
ladite longueur L1 de ladite première partie (494) dudit moyen d'aide à l'installation de partie d'arbre (486) est au moins le double de ladite longueur L2 de ladite seconde partie (496) dudit moyen d'aide à l'installation de partie d'arbre (486) de ladite pluralité de cannelures de partie d'arbre s'étendant axialement (466).

8. Ensemble d'articulation (400) tel que revendiqué selon la revendication 1, comprenant en outre un arbre (482) qui comporte une première partie d'extrémité (510), une seconde partie d'extrémité (512), une surface interne (506) et une surface externe (508) ; dans lequel :
les cannelures d'une pluralité de cannelures d'arbre s'étendant axialement (516) sont étendues de façon circonférentielle le long d'au moins une partie de ladite surface interne (506) dudit arbre (582) ; et dans lequel :
les cannelures de ladite pluralité de cannelures d'arbre s'étendant axialement (516) sur ladite surface interne (506) dudit arbre (582) sont complémentaires par rapport aux cannelures de ladite pluralité de cannelures de partie d'arbre s'étendant axialement (466) sur ladite surface externe (434) de ladite partie d'arbre (458) dudit deuxième élément d'articulation (404) et sont engagées par engrenage avec ces mêmes cannelures de ladite pluralité de cannelures de partie d'arbre s'étendant axialement.

9. Ensemble d'articulation (400) tel que revendiqué selon la revendication 8, comprenant en outre un raccordement sous forme de gaine souple (610) qui comporte une première partie d'extrémité (616) et une seconde partie d'extrémité (618) ; dans lequel :
au moins une partie de ladite première partie d'extrémité (616) dudit raccordement sous forme de gaine souple (610) est connectée à au moins une partie de ladite surface externe (434) dudit deuxième élément d'articulation (404) ; et dans lequel :
au moins une partie de ladite seconde partie d'extrémité (618) dudit raccordement sous forme de gaine souple (610) est connectée à au moins une partie de ladite surface externe (508) de ladite première partie d'extrémité (510) dudit arbre (582).

10. Ensemble d'articulation (400) tel que revendiqué selon la revendication 8, comprenant en outre un matériau de revêtement (706) ; et
dans lequel : ledit matériau de revêtement (706) encapsule au moins une partie de ladite pluralité de cannelures de partie d'arbre s'étendant axialement (466) dudit deuxième élément d'articulation (404) et de ladite pluralité de cannelures d'arbre s'étendant axialement (516) dudit arbre (842) dudit ensemble d'articulation (400).

11. Ensemble d'articulation (400) tel que revendiqué selon la revendication 8, dans lequel : au moins une partie de ladite pluralité de cannelures d'arbre s'étendant axialement (516) de ladite première partie d'extrémité (510) dudit arbre (482) comporte un moyen d'aide à l'installation d'arbre (1002) qui comporte une première extrémité (1004), une seconde extrémité (1006) et une partie de transition (1008) qui est interposée entre ladite première extrémité (1004) et ladite seconde extrémité (1006) dudit moyen d'aide à l'installation d'arbre (1002) ;
dans lequel : depuis ladite première extrémité (1004) jusqu'à ladite partie de transition (1008) dudit moyen d'aide à l'installation d'arbre (1002), une première partie (1010) dudit moyen d'aide à l'installation d'arbre (1002) est définie ; dans lequel :
depuis ladite partie de transition (1008) jusqu'à ladite seconde extrémité (1006) dudit moyen d'aide à l'installation d'arbre (1002), une seconde partie (1012) dudit moyen d'aide à l'installation d'arbre (486) est définie ; et dans lequel :
un diamètre le plus interne de ladite pluralité de cannelures d'arbre s'étendant axialement (516) de ladite première partie (1010) et/ou de ladite seconde partie (1012) dudit moyen d'aide à l'installation d'arbre (1002) est défini par un rayon R11.

12. Ensemble d'articulation (400) tel que revendiqué selon la revendication 11, dans lequel les cannelures de ladite pluralité de cannelures d'arbre s'étendant axialement (516) dudit arbre (482) présentent un diamètre le plus externe OD11 qui est sensiblement constant sur la totalité de ladite longueur de ladite pluralité de cannelures d'arbre s'étendant axialement (516).

13. Ensemble d'articulation (400) tel que revendiqué selon la revendication 11, dans lequel ladite pluralité de cannelures d'arbre s'étendant axialement (516) de ladite première partie (1010) et/ou de ladite seconde partie (1012) dudit moyen d'aide à l'installation d'arbre (1002) dudit arbre (482) présente un diamètre le plus externe OD12 qui est défini par un rayon R12 de telle sorte que ledit diamètre le plus externe OD12 qui est défini par ledit rayon R12 diminue depuis ladite première extrémité (1004) jusqu'à ladite seconde extrémité (1006) dudit moyen d'aide à l'installation d'arbre (1002).

14. Ensemble d'articulation (400) tel que revendiqué selon la revendication 11, dans lequel :ladite pluralité de cannelures d'arbre s'étendant axialement (516) au niveau de ladite partie de transition (1008) dudit moyen d'aide à l'installation d'arbre (1002) présente un diamètre le plus interne ID6 ;
dans lequel : ladite pluralité de cannelures d'arbre s'étendant axialement (516) au niveau de ladite seconde extrémité (1006) dudit moyen d'aide à l'installation d'arbre (1002) présente un diamètre le plus interne ID4 ; et
dans lequel : ledit diamètre le plus interne ID6 est plus grand que ledit diamètre le plus interne ID4 de ladite pluralité de cannelures d'arbre s'étendant axialement (516) dudit arbre (482) ; et/ou dans lequel :
ladite pluralité de cannelures d'arbre s'étendant axialement (516) de ladite première partie dudit moyen d'aide à l'installation d'arbre (1002) présente une longueur L5 ; dans lequel :
ladite pluralité de cannelures d'arbre s'étendant axialement (516) de ladite seconde partie dudit moyen d'aide à l'installation d'arbre (1002) présente une longueur L6 ; et dans lequel :
ladite longueur L6 de ladite seconde partie dudit moyen d'aide à l'installation d'arbre (1002) dudit arbre est au moins le double de ladite longueur L5 de ladite première partie dudit moyen d'aide à l'installation d'arbre (1002) dudit arbre.

15. Ensemble d'articulation (750) tel que revendiqué selon la revendication 1, comprenant en outre un adaptateur de liaison (764) et un arbre (752) ; dans lequel :
ledit adaptateur de liaison (764) comporte une première partie d'extrémité (766), une seconde partie d'extrémité (468), une surface interne (770) et une surface externe (772) ; dans lequel :
des cannelures d'une pluralité de cannelures d'adaptateur de liaison s'étendant axialement (477) sont étendues de façon circonférentielle le long d'au moins une partie de ladite surface interne (770) dudit adaptateur de liaison (764) ; dans lequel :
les cannelures de ladite pluralité de cannelures d'adaptateur de liaison s'étendant axialement (477) dudit adaptateur de liaison (764) sont complémentaires par rapport aux cannelures de ladite pluralité de cannelures de partie d'arbre s'étendant axialement (466) de ladite partie d'arbre (458) dudit deuxième élément d'articulation (404) et sont engagées par engrenage avec ces mêmes cannelures de ladite pluralité de cannelures de partie d'arbre s'étendant axialement ; dans lequel :
ledit arbre (752) comporte une première partie d'extrémité (758), une seconde partie d'extrémité (760), une surface interne (754) et une surface externe (756) ; et dans lequel :
au moins une partie de ladite première partie d'extrémité (758) dudit arbre (752) est connectée d'un seul tenant à au moins une partie de ladite surface externe (772) dudit adaptateur de liaison (764).
